(19) Europäisches Patentamt
European Patent Office
Office européen des brevets

(11) **EP 3 882 305 B1**

(12) # EUROPEAN PATENT SPECIFICATION

(45) Date of publication and mention of the grant of the patent:
**06.08.2025 Bulletin 2025/32**

(21) Application number: **19900016.7**

(22) Date of filing: **14.12.2019**

(51) International Patent Classification (IPC):
***C08K 5/3435*** *(2006.01)* ***C08K 5/5333*** *(2006.01)*
***C08L 23/00*** *(2006.01)* ***H01B 3/44*** *(2006.01)*
***H01B 7/02*** *(2006.01)* ***H01B 7/295*** *(2006.01)*

(52) Cooperative Patent Classification (CPC):
(C-Sets available)
**H01B 3/441; C08K 5/3435; C08K 5/34926; C08K 5/5357; C08L 23/0815; C08L 23/142; H01B 7/295;** H01B 7/02 (Cont.)

(86) International application number:
**PCT/JP2019/049073**

(87) International publication number:
**WO 2020/129871 (25.06.2020 Gazette 2020/26)**

(54) **FLAME-RETARDANT RESIN COMPOSITION, FLAME-RETARDANT RESIN COMPOSITION FOR CABLE, CABLE, MOLDED ARTICLE, AND FLAME RETARDANT MASTER BATCH USING SAME, AND FLAME RETARDANT**

FLAMMHEMMENDE HARZZUSAMMENSETZUNG, FLAMMHEMMENDE HARZZUSAMMENSETZUNG FÜR KABEL, KABEL, FORMKÖRPER UND FLAMMHEMMENDES MASTERBATCH DAMIT UND FLAMMSCHUTZMITTEL

COMPOSITION DE RÉSINE IGNIFUGE, COMPOSITION DE RÉSINE IGNIFUGE POUR CÂBLE, CÂBLE, ARTICLE MOULÉ ET MÉLANGE MAÎTRE IGNIFUGE L’UTILISANT ET AGENT IGNIFUGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2018 JP 2018236828**
**18.12.2018 JP 2018236829**
**31.07.2019 JP 2019141849**
**31.07.2019 JP 2019141850**
**31.07.2019 JP 2019141851**

(43) Date of publication of application:
**22.09.2021 Bulletin 2021/38**

(73) Proprietor: **Fujikura Ltd.**
**Tokyo 135-8512 (JP)**

(72) Inventors:
- **IWATA, Masayuki**
**Sakura-shi, Chiba 285-8550 (JP)**
- **NAKAMURA, Shoichiro**
**Sakura-shi, Chiba 285-8550 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 309 402** **EP-A1- 2 825 589**
**EP-A1- 3 202 834** **EP-B1- 2 225 318**
**WO-A1-2013/174482** **WO-A1-2015/178151**
**WO-A1-2015/178151** **WO-A1-2016/052739**
**WO-A1-2017/013028** **WO-A1-2017/015338**
**JP-A- 2015 510 023** **JP-A- 2018 205 517**
**JP-A- 2018 522 123** **JP-B1- 6 263 307**
**US-A1- 2011 257 310** **US-A1- 2011 257 310**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/3435, C08L 23/12;**
**C08K 5/3435, C08L 53/00;**
**C08K 5/34926, C08L 23/12;**
**C08K 5/34926, C08L 53/00;**
**C08K 5/5357, C08L 23/12;**
**C08K 5/5357, C08L 53/00;**
**C08L 23/06, C08L 9/06, C08K 5/3435, C08K 5/5333;**
**C08L 23/06, C08L 23/0815, C08K 5/3435, C08K 5/5333;**
**C08L 23/12, C08L 23/16, C08K 5/3435, C08K 5/5333;**
**C08L 23/12, C08L 51/06, C08K 5/3435, C08K 5/5333**

## Description

### TECHNICAL FIELD

The present invention relates to a flame-retardant resin composition, a flame-retardant resin composition for a cable, a cable, a molded body, a flame-retardant master batch using the same, and a flame retardant.

### BACKGROUND ART

Polyolefin resins have excellent mechanical properties, and is widely used for building materials, packaging materials, OA equipment, automotive members, cables, and the like. Since polyolefin resins are combustible substances, they are used with various flame retardants such as a halogen flame retardant, a phosphorus flame retardant, a metal hydrate flame retardant added. However, the halogen flame retardant is likely to generate poisonous gases or smoke at the time of combustion and is subject to regulations depending on countries although the halogen flame retardant can impart excellent flame retardancy. Therefore, in recent years, a flame-retardant resin composition using a non-halogen flame retardant is required. As such a flame-retardant resin composition, a flame-retardant resin composition simultaneously using a phosphoric acid ester and an NOR-type hindered amine compound is known (see the following Patent Document 1).

Furthermore, EP 3 202 834 A1 is concerned with foamed thermoplastic polymer material which shows flame retardancy. A pre-expanded particle of a polyolefin-based resin composition includes an organic phosphorus-containing compound (B) and a hindered amine (C). The organic phosphorus-containing compound (B) may be a cyclic bisphosphonate of the following formula (A), where $A^1$ and $A^2$ are preferably methyl.

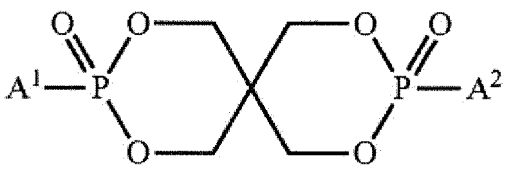

(A)

US 2011/257310 A1, WO 2013/174482 A1 and WO 2017/015338 A1 inter alia relate to polymer compositions that contain a flame-retardant mixture. The flame-retardant mixture may contain a cyclic bisphosphonate of the above formula (A), where $A^1$ and $A^2$ are preferably methyl, and a hindered amine.

WO 2013/136285 A1 describes a composition containing a polymer, a NOR-HALS compound as a hindered amine and a flame-retardant phosphorus compound. According to an embodiment the phosphorus compound is pentaerythritol-di-methyl phosphonate.

In WO 2017/013028 A1, a flame-retardant article is described, which comprises a polyolefin substrate having additives incorporated therein. The additives comprise a phosphonate ester of above formula (A), where $A^1$ and $A^2$ are preferably methyl, an N-alkoxy hindered amine, and a melamine cyanurate.

### CITATION LIST

### PATENT DOCUMENT

Patent Document 1: JP 2017-66299 A

### SUMMARY OF THE INVENTION

### PROBLEM TO BE SOLVED BY THE INVENTION

The flame-retardant resin composition described in the Patent Document 1 exhibits excellent flame retardancy. However, the flame-retardant resin composition described in the Patent Document 1 has room for improvement in terms of inhibiting separation of a flame retardant. Here, separation of a flame retardant means that when the flame retardant is kneaded with a resin, the flame retardant is separated (not mixed), or the flame retardant itself or the decomposed flame retardant is discharged to a surface of a resin composition in a solid state or a liquid state after the flame retardant is once dispersed into the resin composition, and also means that the flame retardancy is lowered.

The present invention has been made in view of the above-circumstances, the purpose thereof is to provide a flame-retardant resin composition having excellent flame retardancy and capable of suppressing separation of the flame

retardant, a cable, a flame-retardant resin composition for a cable, a molded body, a flame-retardant master batch using the same, and a flame retardant.

**Means for Solving Problem**

The present inventors have carried out intensive studies to solve the above problem. As a result, the inventors found that the above problem can be solved by a flame-retardant resin composition obtained by blending a specific organic phosphorus compound and a specific hindered amine compound to a base resin containing a polyolefin resin.

Namely, the present invention is a flame-retardant resin composition which contains a base resin (A) containing a polyolefin resin and a flame retardant, in which the flame retardant includes an organic phosphorus compound (B) and a hindered amine compound (C), and in which the organic phosphorus compound (B) is represented by the following general formula (1) and the hindered amine compound (C) contains a group represented by the following general formula (2).

[Chem. 1]

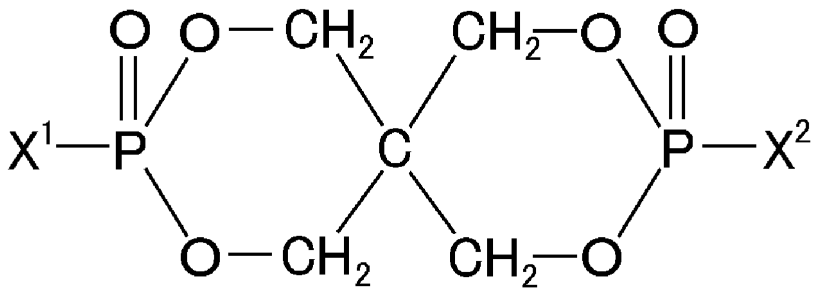

(1)

In the general formula (1), $X^1$ and $X^2$ each represent an aromatic hydrocarbon group, and may be the same or different.

[Chem.2]

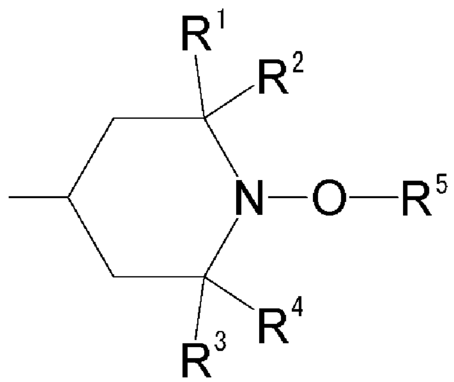

(2)

In the general formula (2), $R^1$ to $R^4$ each independently represent an alkyl group having 1 to 8 carbon atoms, $R^5$ represents an alkyl group having 1 to 50 carbon atoms, a cycloalkyl group having 5 to 12 carbon atoms, an aralkyl group having 7 to 25 carbon atoms, or an aryl group having 6 to 12 carbon atoms.

The flame-retardant resin composition of the present invention has excellent flame retardancy and can suppress separation of the flame retardant.

The present inventors presume the reason why the flame-retardant resin composition of the present invention has excellent flame retardancy as follows:

That is, the organic phosphorus compound (B) represented by the general formula (1) has excellent flame retardancy since the organic phosphorus compound contains a large amount of phosphorus in the molecular structure and is difficult to be separated from the base resin (A). On the other hand, the hindered amine compound (C) also can impart excellent flame retardancy since has a group represented by the general formula (2). As a result, it is considered that the flame-retardant resin composition has excellent flame retardancy.

The reason why the separation of the flame retardant is suppressed, is not clearly understood, but the inventors of the present invention presume the reason as follows:

That is, the organic phosphorus compound has a high melting point, does not melt during molding of the flame-retardant resin composition, and is difficult to be separated from the polyolefin resin since the organic phosphorus compound has a spiro ring structure. On the other hand, in a case where the flame-retardant resin composition does not contain an organic phosphorus compound (B), the hindered amine compound (C) tends to be easily separated from the polyolefin resin by melting at the time of molding the flame-retardant resin composition, compared to the organic phosphorus compound (B) . In contrast, since the flame-retardant resin composition contains the organic phosphorus compound (B), the hindered amine compound (C) is difficult to be separated from the organic phosphorus compound (B) even at the time of molding the flame-retardant resin composition by the interaction between the organic phosphorus compound (B) in the flame-retardant resin composition and the group represented by the general formula (2) of the hindered amine compound (C). Therefore, even when the flame-retardant resin composition is molded, the hindered amine compound (C) is difficult to be separated from the polyolefin resin. As a result, it is considered that separation of the flame retardant is suppressed in the flame-retardant resin composition.

In the flame-retardant resin composition, the hydrocarbon group represented by $X^1$ and $X^2$ is an aromatic hydrocarbon group in the general formula (1).

Therefore, hydrolysis resistance of the flame-retardant resin composition can be further improved. The reason why the hydrolysis resistance is thus improved is not clearly understood, but it is considered that the aromatic hydrocarbon group prevents hydrolysis of the organic phosphorus compound (B) due to a steric hindrance to the water molecule or by an electronic action.

In the flame-retardant resin composition, the aromatic hydrocarbon group is preferably a phenylmethyl group (benzyl group).

In this case, hydrolysis resistance and flame retardancy of the flame-retardant resin composition can be more effectively improved.

In the flame-retardant resin composition, it is preferable that, because the hydrocarbon group represented by $X^1$ and $X^2$ in the general formula (1) is an aromatic hydrocarbon group or a phenylmethyl group (benzyl group), a foreign matter be not confirmed on the surface in a case where surface observation or touch confirmation is performed after the flame-retardant resin composition is left in a constant temperature bath of 85°C and 85% RH for 48 hours.

This flame-retardant resin composition has excellent hydrolysis resistance.

In the flame-retardant resin composition, it is preferable that the hindered amine compound (C) be blended at a ratio of less than 0.4 parts by mass to 100 parts by mass of the base resin (A).

In this case, compared with a case where the hindered amine compound (C) is blended at a ratio of 0.4 parts by mass or more, the flame-retardant resin composition can further suppress an odor.

The reason why the flame-retardant resin composition can suppress an odor is not clear, but the inventors presume the reason as follows.

That is, the odor is considered to be caused by an amine-based substance generated by the decomposition of the hindered amine compound. However, since the hindered amine compound (C) is difficult to be separated from the organic phosphorus compound (B) and its amount is small, as described above, the generated amine-based substance is considered to be difficult to be separated from the organic phosphorus compound (B). As a result, it is considered that the odor due to the amine-based substance is difficult to be released into the flame-retardant resin composition and the odor is suppressed.

In the flame-retardant resin composition, the mass ratio of the organic phosphorus compound (B) to the hindered amine compound (C) is preferably 5.6 or more.

In this case, compared with a case where the mass ratio of the organic phosphorus compound (B) to the hindered amine compound (C) is less than 5.6, the flame retardancy of the flame-retardant resin composition can be further improved.

In the flame-retardant resin composition, the mass ratio of the organic phosphorus compound (B) to the hindered amine compound (C) is preferably 11.1 or less.

In this case, compared with a case where the mass ratio of the organic phosphorus compound (B) to the hindered amine compound (C) exceeds 11.1, the flame retardancy of the flame-retardant resin composition can be further improved.

In the flame-retardant resin composition, it is preferable that the number of groups represented by the general formula (2) (hereinafter referred to as "amine number") per gram in the hindered amine compound (C) is $1 \times 10^{21}$ or more.

In this case, the flame retardancy of the flame-retardant resin composition can be further improved as compared with a case where the amine number per gram in the hindered amine compound (C) is less than $1 \times 10^{21}$.

In the flame-retardant resin composition, it is preferable that the hindered amine compound (C) has a plurality of groups represented by the general formula (2) in one molecule.

In this case, compared with a case where the hindered amine compound (C) has only one group represented by the general formula (2) in one molecule, the flame retardancy of the flame-retardant resin composition can be further improved.

In the flame-retardant resin composition, $R^5$ in the general formula (2) is preferably an alkyl group having 1 to 30

carbon atoms or a cycloalkyl group having 5 to 12 carbon atoms.

In this case, the flame retardancy of the flame-retardant resin composition can be further improved as compared with a case where $R^5$ in the general formula (2) is neither an alkyl group having 1 to 30 carbon atoms nor a cycloalkyl group having 5 to 12 carbon atoms.

In the flame-retardant resin composition, the hindered amine compound (C) is preferably a solid at 25°C.

In this case, compared with a case where the hindered amine compound (C) is a liquid at 25°C, the processability of the flame-retardant resin composition is further improved.

In the flame-retardant resin composition, it is preferable that the hindered amine compound (C) has a decomposition temperature of 240°C or higher.

In this case, compared with a case where the decomposition temperature of the hindered amine compound (C) is less than 240°C, the flame retardancy and processability of the flame-retardant resin composition are further improved.

In the flame-retardant resin composition, the hindered amine compound (C) preferably contains a triazine ring.

In this case, compared with a case where the hindered amine compound (C) does not contain a triazine ring, the flame retardancy and processability of the flame-retardant resin composition can be further improved.

In the flame-retardant resin composition, $R^5$ in the general formula (2) represents, for example, a cycloalkyl group having 5 to 12 carbon atoms.

In the flame-retardant resin composition, the hindered amine compound (C) preferably has a decomposition temperature of 250°C or higher.

In this case, compared with a case where the decomposition temperature of the hindered amine compound (C) is less than 250°C, the flame retardancy and processability of the flame-retardant resin composition can be further improved.

In the flame-retardant resin composition, $R^5$ in the general formula (2) is preferably an alkyl group having 1 to 30 carbon atoms.

In this case, the flame retardancy and processability of the flame-retardant resin composition can be further improved as compared with a case where $R^5$ in the general formula (2) is not an alkyl group having 1 to 30 carbon atoms.

In the flame-retardant resin composition, the hindered amine compound (C) preferably does not contain a triazine ring.

In this case, compared with a case where the hindered amine compound (C) contains a triazine ring, coloration (yellowing) at the time of deterioration due to heat or light can be further suppressed.

The flame-retardant resin composition preferably further contains a drip preventing agent (D).

In this case, resin sagging (dripping) during combustion of the flame-retardant resin composition can be suppressed.

In the flame-retardant resin composition, it is preferable that the melting point of the organic phosphorus compound (B) be higher than the melting temperature of the base resin (A), and the melting point of the hindered amine compound (C) be lower than the melting temperature of the base resin (A) .

In this case, the flame-retardant resin composition can sufficiently suppress the separation of the flame retardant.

The reason why the separation of the flame retardant is sufficiently suppressed by the flame-retardant resin composition of the present invention is not clear, but the inventors presumes the reason as follows.

That is, the organic phosphorus compound has a high melting point, does not melt during molding of the flame-retardant resin composition, and is difficult to be separated from the polyolefin resin since the organic phosphorus compound has a spiro ring structure. On the other hand, the melting point of the hindered amine compound (C) is lower than the melting temperature of the base resin (A) and the melting point of the organic phosphorus compound (B) is higher than the melting temperature of the base resin (A) . For this reason, the molten hindered amine compound (A) tends to be easily separated from the polyolefin resin at the time of molding the flame-retardant resin composition at the melting temperature of the base resin (A) in a case where the flame-retardant resin composition does not contain the organic phosphorus compound (B). In contrast, in the flame-retardant resin composition of the present invention, the flame-retardant resin composition contains an organic phosphorus compound (B), and the hindered amine compound (C) infiltrates into a solid organic phosphorus compound (B) dispersed in the base resin (A) and thereby captured by the organic phosphorus compound (B) when the flame-retardant resin composition is molded at the melting temperature of the base resin (A). Therefore, in the flame-retardant resin composition of the present invention, even when the flame-retardant resin composition is molded at the melting temperature of the base resin (A), the hindered amine compound (C) is difficult to be separated from the polyolefin resin. As a result, it is considered that separation of the flame retardant is more sufficiently suppressed in the flame-retardant resin composition.

In the flame-retardant resin composition, the melting point of the organic phosphorus compound (B) is at least 40°C higher than the melting temperature of the base resin (A), for example.

In the flame-retardant resin composition, the melting point of the hindered amine compound (C) is at least 3°C lower than the melting temperature of the base resin (A), for example.

In the flame-retardant resin composition, the blending ratio of the hindered amine compound (C) to 100 parts by mass of the base resin (A) is preferably 0.5 parts by mass or more.

In this case, compared with a case where the blending ratio of the hindered amine compound (C) to 100 parts by mass of the base resin (A) is less than 0.5 parts by mass, the flame retardancy of the flame-retardant resin composition can be further improved.

In the flame-retardant resin composition, the blending ratio of the organic phosphorus compound (B) to 100 parts by mass of the base resin (A) is preferably 5 parts by mass or more.

In this case, the flame retardancy of the flame-retardant resin composition can be further improved as compared with a case where the blending ratio of the organic phosphorus compound (B) to 100 parts by mass of the base resin (A) is less than 5 parts by mass.

In the flame-retardant resin composition, it is preferable that the flame retardant consist of the organic phosphorus compound (B) and the hindered amine compound (C).

The flame-retardant resin composition does not fall under any of the following (i) and (ii).

(i) A foreign matter is confirmed on the surface of the flame-retardant resin composition.
(ii) A foreign matter is confirmed on the surface of the flame-retardant resin composition after the flame-retardant resin composition is left in a constant temperature bath at 85°C for 48 hours.

The flame-retardant resin composition satisfies either of the following requirement (a) or (b) when a combustion test of an automotive interior material based on FMVSS No. 302 is performed.

(a) Self-extinguishing is observed
(b) Self-extinguishing is not observed but the combustion rate is 102 mm/min or less.

The present invention is a flame-retardant resin composition for a cable including the above-mentioned flame-retardant resin composition.

The flame-retardant resin composition for a cable of the present invention can impart excellent flame retardancy to a cable when used as at least a part of the insulator of the cable, and can maintain the flame retardancy of the cable for a long period of time. Therefore, the flame-retardant resin composition for a cable of the present invention can eliminate the need for a cable to be replaced for a long period of time.

The present invention is also a cable including a transmission medium composed of a conductor or an optical fiber, and an insulator covering the transmission medium, wherein the insulator includes an insulating part composed of the flame-retardant resin composition.

According to the cable of the present invention, the insulating part is composed of the flame-retardant resin composition having excellent flame retardancy and capable of suppressing separation of the flame retardant. Therefore, the cable of the present invention has excellent flame retardancy and can maintain its flame retardancy for a long period of time. Therefore, the cable of the present invention does not need to be replaced for a long period of time.

The present invention is a molded body containing the flame-retardant resin composition.

The molded body includes the flame-retardant resin composition having excellent flame retardancy and capable of suppressing separation of the flame retardant. Therefore, the molded body of the present invention has excellent flame retardancy and can maintain its flame retardancy for a long period of time. Therefore, the molded body of the present invention does not need to be replaced for a long period of time.

The molded body may further comprise at least a sheet layer containing the flame-retardant resin composition.

The present invention is a flame retardant master batch composed of the flame-retardant resin composition.

The flame-retardant master batch is composed of the flame-retardant resin composition, and the flame-retardant resin composition has excellent flame retardancy and can suppress the separation of the flame retardant. Therefore, even if the flame-retardant master batch is produced by kneading with another resin, the molded body has excellent flame retardancy and can suppress the separation of the flame retardant.

Further, the present invention is a flame retardant including an organic phosphorus compound (B) and a hindered amine compound (C), in which the organic phosphorus compound (B) is represented by the following general formula (1), and the hindered amine compound (C) has a group represented by the following general formula (2).

[Chem.3]

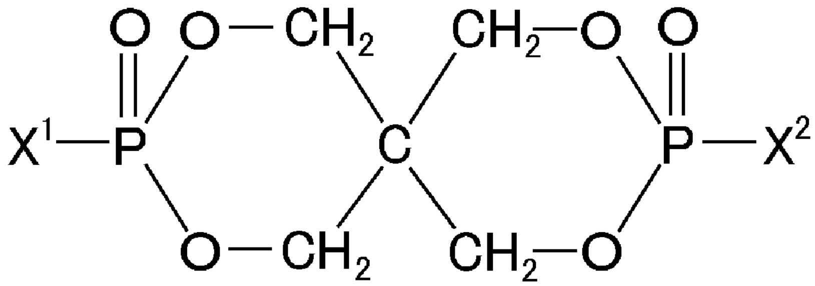

(1)

In the general formula (1), $X^1$ and $X^2$ each represent an aromatic hydrocarbon group, and may be the same or different.

[Chem.4]

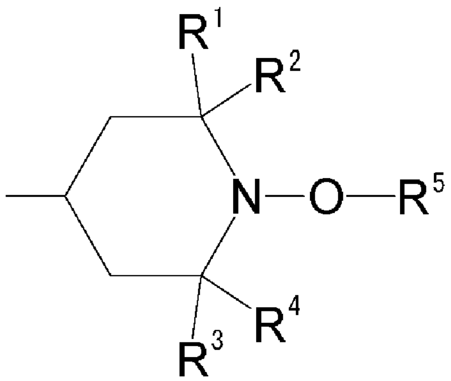

(2)

In the general formula (2), $R^1$ to $R^4$ each independently represent an alkyl group having 1 to 8 carbon atoms, $R^5$ represents an alkyl group having 1 to 50 carbon atoms, a cycloalkyl group having 5 to 12 carbon atoms, an aralkyl group having 7 to 25 carbon atoms, or an aryl group having 6 to 12 carbon atoms.

The flame retardant can impart excellent flame retardancy to the flame-retardant resin composition when the flame-retardant resin composition is produced by kneading the flame retardant with a base resin (A) containing a polyolefin resin. In addition, the flame retardant of the present invention is difficult to be separated from the base resin (A) even when kneaded with the base resin (A) containing the polyolefin resin. Therefore, separation of the flame retardant in the flame-retardant resin composition can be suppressed.

In the flame retardant, the hydrocarbon group represented by $X^1$ and $X^2$ in the general formula (1) is an aromatic hydrocarbon group.

The flame retardant can further improve the hydrolysis resistance of the flame-retardant resin composition when the flame-retardant resin composition is produced by kneading the flame retardant with a base resin (A) containing a polyolefin resin.

In the flame retardant, it is preferable that the aromatic hydrocarbon group is a phenylmethyl group.

The flame retardant can more effectively improve the hydrolysis resistance and flame retardancy of the flame-retardant resin composition when the flame-retardant resin composition is produced by kneading the flame retardant with a base resin (A) containing a polyolefin resin.

In the flame retardant, the melting point of the organic phosphorus compound (B) is preferably higher than the melting point of the hindered amine compound (C).

The flame retardant can impart excellent flame retardancy to the flame-retardant resin composition when the flame-retardant resin composition is produced by kneading the flame retardant with a base resin (A) containing a polyolefin resin at a melting temperature of the base resin (A) . In addition, the flame retardant of the present invention is difficult to be separated from the base resin (A) even when kneaded with the base resin (A) containing the polyolefin resin at the melting temperature of the base resin (A) . Therefore, separation of the flame retardant in the flame-retardant resin composition can be sufficiently suppressed.

The flame retardant preferably consists of the organic phosphorus compound (B) and the hindered amine compound (C).

In the flame retardant, the mass ratio of the organic phosphorus compound (B) to the hindered amine compound (C) is preferably 5.6 or more.

The flame retardant can further improve the flame retardancy of the flame-retardant resin composition when the flame-retardant resin composition is produced by kneading the flame retardant with a base resin (A) containing a polyolefin

resin.

In the flame retardant, the mass ratio of the organic phosphorus compound (B) to the hindered amine compound (C) is preferably 11.1 or less.

The flame retardant can further improve the flame retardancy of the flame-retardant resin composition compared with a case where the mass ratio of the organic phosphorus compound (B) to the hindered amine compound (C) exceeds 11.1 when the flame retardant is blended into the flame-retardant resin composition.

In the present invention, the "decomposition temperature" of the hindered amine compound means a decomposition temperature measured by the Thermogravimetry/Differential thermal analysis (TG/DTA), and specifically means a decomposition temperature measured under the following measurement conditions using the following measuring device for a sample comprising a hindered amine compound. Here, the decomposition temperature is a temperature at which the weight of the hindered amine compound is reduced by 1%.

(Measuring device)

Product name "TG/DTA6300" (manufactured by Hitachi High-Tech Science Corporation)
(Measurement condition)
Sample amount: about 5 mg
Measurement temperature: from 25°C to 600°C
Measurement atmosphere: air flow (200 mL/min)
Temperature rising rate is 10°C/min
Material of a sample container: aluminum (Al)

In the present invention, the "melting temperature" of the base resin (A) refers to the temperature below.

(1) the melting point (°C) of the base resin (A) +30°C when the base resin (A) is composed of only a crystalline polymer.
(2) the glass transition point (°C) of the base resin (A) +30°C when the base resin (A) is composed of only an amorphous polymer.
(3) The melting point or the glass transition temperature of the component having the highest content among a crystalline polymer and an amorphous polymer + 30°C when the base resin (A) is composed of a mixture of the crystalline polymer and the amorphous polymer (a physical blend or a copolymer).

"+30°C" is a value determined considering that a temperature at the time of melt-processing a resin is generally set at 30°C higher than the melting point or the glass transition point of the resin.

In the present invention, the melting point of the base resin (A) is determined by the method specified in JIS K 7121. Specifically, when heating is once performed to a molten state by a differential scanning calorimeter (DSC), the heat history is erased by crystallization at a cooling rate of 5°C/min and a DSC curve is measured under the condition of a temperature rise rate of 10°C/min again, the molten peak is determined as a melting point.

In the present invention, the glass transition point of the base resin (A) is determined by the method specified in JIS K 7121. Specifically, when heating is once performed to a molten state by a differential scanning calorimeter (DSC), the heat history is erased by crystallization at a cooling rate of 5°C/min and a DSC curve is measured under the condition of a temperature rise rate of 20°C/min, the intermediate point of the change in the base line is determined as a glass transition temperature.

**Effect of the Invention**

According to the present invention, a flame-retardant resin composition having excellent flame retardancy and capable of suppressing separation of a flame retardant, a flame-retardant resin composition for a cable, a cable, a molded body, and a flame-retardant master batch using the same and a flame retardant are provided.

**BRIEF DESCRIPTION OF THE DRAWINGS**

Fig. 1 is a partial side view showing a first embodiment of a cable according to the present invention;
Fig. 2 is a cross-sectional view taken along the line II-II of Fig. 1; and
Fig. 3 is a cross-sectional view showing a second embodiment of a cable according to the present invention.

## MODE(S) FOR CARRYING OUT THE INVENTION

Embodiments of the present invention are described in detail below.

<Flame-retardant resin composition>

This flame-retardant resin composition of the present invention contains a base resin (A) containing a polyolefin resin and a flame retardant, and the flame retardant contains an organic phosphorus compound (B) and a hindered amine compound (C) . Here, the organic phosphorus compound (B) is represented by the following general formula (1), and the hindered amine compound (C) has a group represented by the following general formula (2).

[Chem.5]

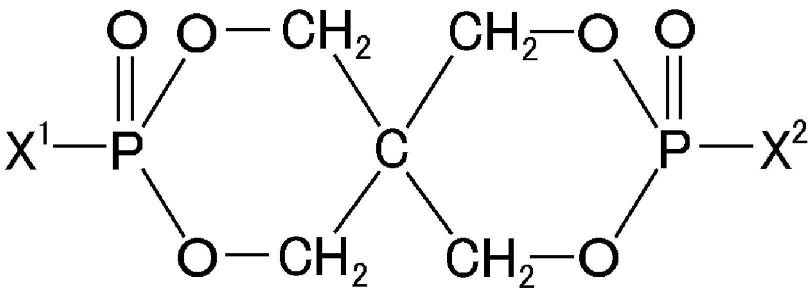

(1)

In the general formula (1), $X^1$ and $X^2$ each represent an aromatic hydrocarbon group, and may be the same or different.

[Chem.6]

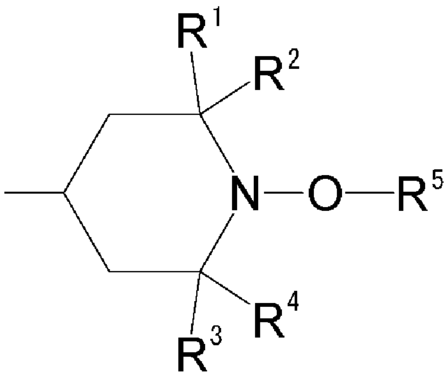

(2)

In the general formula (2), $R^1$ to $R^4$ each independently represent an alkyl group having 1 to 8 carbon atoms, $R^5$ represents an alkyl group having 1 to 50 carbon atoms, a cycloalkyl group having 5 to 12 carbon atoms, an aralkyl group having 7 to 25 carbon atoms, or an aryl group having 6 to 12 carbon atoms.

The flame-retardant resin composition of the present invention has excellent flame retardancy and can suppress the separation of the flame retardant. In the flame-retardant resin composition of the present invention, the flame retardant is difficult to be separated from the base resin (A). Therefore, the flame-retardant resin composition of the present invention is useful as a flame retardant master batch in which a flame retardant is blended at a high concentration.

The base resin (A), the organophosphorus compound (B) and the hindered amine compound (C) are described in detail below.

(A) Base resin

The base resin (A) contains a polyolefin resin. The polyolefin resin has a structural unit derived from an olefin (unsaturated aliphatic hydrocarbon) in the molecule, and is composed of a non-modified polyolefin resin or a modified polyolefin resin. These may be used alone or in combination of two or more.

(A1) Non-modified polyolefin resin

Examples of the non-modified polyolefin resin include an ethylene polymer, a propylene polymer and an olefinic thermoplastic elastomer. These can be used alone or in combination of two or more.
The ethylene polymer is a polymer containing a structural unit derived from ethylene, and examples of the ethylene polymer include polyethylene, an ethylene-$\alpha$-olefin copolymer, and an ethylene propylene diene copolymer.
Examples of the polyethylene include high density polyethylene (HDPE), medium density polyethylene (MDPE), low density polyethylene (LDPE), linear polyethylene (LLDPE), ultra-low density polyethylene (VLDPE), and metallocene ultra-low density polyethylene. These may be used alone or in combination of two or more.
The propylene-based polymer refers to a polymer mainly containing a constituent unit derived from propylene. Examples of the propylene polymer include homopolypropylene, propylene-ethylene copolymer, and propylene-$\alpha$-olefin copolymer. Examples of the $\alpha$-olefin include 1-butene, 2-butene, 1-hexene and 2-hexene.
When the propylene polymer is a copolymer such as a propylene-ethylene copolymer or a propylene-$\alpha$-olefin copolymer, the copolymer may be a block copolymer or a random copolymer. However, the copolymer is preferably a block copolymer. When the copolymer is a block copolymer, the abrasion resistance of the flame-retardant resin composition can be further improved as compared with a case where the copolymer is a random copolymer.
Examples of the olefinic elastomer include a polypropylene elastomer and an olefin-ethylene-butylene-olefin copolymer such as an olefin crystal-ethylene-butylene-olefin crystal block copolymer (CEBC copolymer) . These can be used alone or in combination of two or more.
The non-modified polyolefin resin preferably contains an olefin elastomer from the viewpoint of improving impact resistance.

(A2) Modified polyolefin resin

The modified polyolefin resin is a resin obtained by modifying the polyolefin resin or a precursor thereof by grafting or copolymerization. Examples of the functional group introduced by modification include a carboxyl group, an acid anhydride group, a methacryloxy group, an acryloxy group, an acrylic group, an acetyl group, an alkoxy group (for example, a methoxy group or an ethoxy group) . Among them, a carboxyl group and an acid anhydride group are preferable. In this case, the abrasion resistance of the flame-retardant resin composition can be more effectively improved compared with a case where the functional group introduced by modification is a functional group other than the carboxyl group and the acid anhydride group. Examples of the substance used for grafting or copolymerization include an acid, an acid anhydride and a derivative thereof. Examples of the acid include carboxylic acids such as acetic acid, acrylic acid, maleic acid, and methacrylic acid. Examples of the acid anhydride include an anhydrous carboxylic acid such as maleic anhydride.
Examples of the modified resin include an ethylene-vinyl acetate copolymer, an ethylene-acrylic ester copolymer, an ethylene-methacrylic acid ester copolymer, a maleic acid-modified polyolefin, a maleic anhydride-modified polyolefin, a maleic acid-modified styrene elastomer, and a maleic anhydride-modified styrene elastomer.

(A3) Non-polyolefin resin

The base resin (A) may further contain a non-polyolefin resin in addition to the polyolefin resin. From the viewpoint of improving impact resistance, the non-polyolefin resin preferably contains a non-olefinic elastomer. Examples of the non-olefin elastomer include a block copolymer of olefin and stylene such as styrene-butadiene rubber (SBR), styrene-ethylene-butadiene-styrene copolymer (SEBS copolymer), styrene-propylene-butadiene-styrene copolymer (SPBS copolymer), styrene-butadiene-styrene copolymer (SBS copolymer), styrene-isoprene-styrene copolymer (SIS copolymer); and a hydrogenated product obtained by hydrogenating and modifying these (a hydrogenated SBR, a hydrogenated SEBS copolymer, a hydrogenated SPBS copolymer, a hydrogenated SBS copolymer and a hydrogenated SIS copolymer) . These can be used alone or in combination of two or more.

(B) Organic phosphorus compound

The organic phosphorus compound (B) is a flame retardant, and as described above, the organic phosphorus compound is represented by the following general formula (1).

[Chem.7]

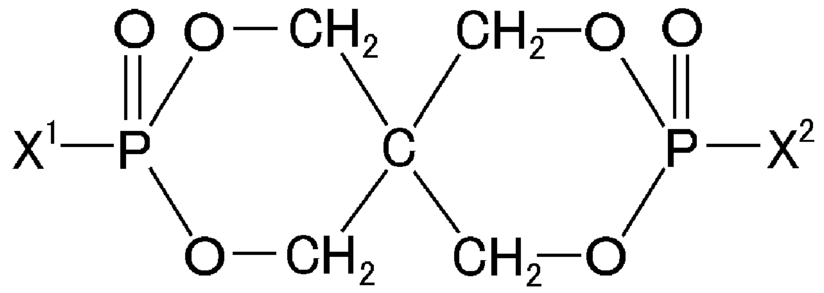

(1)

In the general formula (1), $X^1$ and $X^2$ each represent an aromatic hydrocarbon group. $X^1$ and $X^2$ may be the same or different from each other.

Examples of the aromatic hydrocarbon group include an aryl group and an aralkyl group.

Examples of the aryl group include a phenyl group, a naphthyl group and an anthryl group.

Examples of the aralkyl group include a phenylmethyl group (benzyl group), a phenylethyl group, a phenylpropyl group, a naphthylmethyl group, a naphthylethyl group, an anthryl methyl group and an anthryl ethyl group.

In the general formula (1), $X^1$ and $X^2$ are an aromatic hydrocarbon group. Therefore, hydrolysis resistance of the flame-retardant resin composition can be further improved.

In particular, the aromatic hydrocarbon group is preferably a phenylmethyl group (benzyl group). In this case, compared with a case where $X^1$ and $X^2$ in the general formula (1) are not a phenylmethyl group, hydrolysis resistance and flame retardancy of the flame-retardant resin composition can be more effectively improved.

The blending ratio of the organic phosphorus compound (B) to 100 parts by mass of the base resin (A) is not particularly limited, but is preferably 0.1 parts by mass or more. In this case, the flame retardancy of the flame-retardant resin composition can be further improved as compared with a case where the blending ratio of the organic phosphorus compound (B) to 100 parts by mass of the base resin (A) is less than 0.1 parts by mass.

The blending ratio of the organic phosphorus compound (B) to 100 parts by mass of the base resin (A) is more preferably 1 part by mass or more. In this case, the flame retardancy of the flame-retardant resin composition can be further improved as compared with a case where the blending ratio of the organic phosphorus compound (B) to 100 parts by mass of the base resin (A) is less than 1 part by mass. The blending ratio of the organic phosphorus compound (B) to 100 parts by mass of the base resin (A) is more preferably 3 parts by mass or more and more preferably 5 parts by mass or more, from the viewpoint of improving the flame retardancy of the flame-retardant resin composition.

The blending ratio of the organic phosphorus compound (B) to 100 parts by mass of the base resin (A) is preferably 50 parts by mass or less. In this case, the processability of the flame-retardant resin composition can be further improved as compared with a case where the blending ratio of the organic phosphorus compound (B) to 100 parts by mass of the base resin (A) exceeds 50 parts by mass.

(C) Hindered amine compound

The hindered amine compound (C) is a flame retardant and has only to have a group represented by the following general formula (2).

[Chem.8]

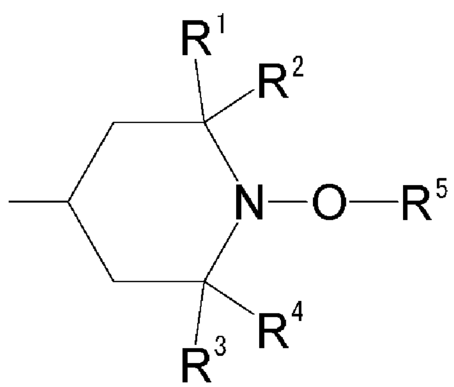

(2)

In the general formula (2), $R^1$ to $R^4$ each independently represent an alkyl group having 1 to 8 carbon atoms, $R^5$ represents an alkyl group having 1 to 50 carbon atoms, a cycloalkyl group having 5 to 12 carbon atoms, an aralkyl group having 7 to 25 carbon atoms, or an aryl group having 6 to 12 carbon atoms.

Examples of the alkyl group represented by $R^1$ to $R^4$ in the above general formula (2) include, for example, a methyl group, an ethyl group, a propyl group, a butyl group, a pentyl group, a hexyl group, a heptyl group and an octyl group.

Here, "alkyl group" includes not only a non-substituted alkyl group but also a substituted alkyl group. As the substituted alkyl group, a substituted alkyl group obtained by substituting a hydrogen atom of a non-substituted alkyl group can be used.

Examples of the alkyl group represented by $R^5$ in the general formula (2) include, for example, a methyl group, an ethyl group, a propyl group, a butyl group, a pentyl group, a hexyl group, a heptyl group, an octyl group, a nonyl group, a decyl group, a undecyl group, a dodecyl group, a tridecyl group, a tetradecyl group, a pentadecyl group, a hexadecyl group, a heptadecyl group, and an octadecyl group.

Examples of the cycloalkyl group represented by $R^5$ include a cyclopentyl group, a cyclohexyl group, a cycloheptyl group, a cyclooctyl group, a cyclononyl group, a cyclodecyl group, a cycloundecyl group, and a cyclododecyl group.

Examples of the aralkyl group represented by $R^5$ include a phenylmethyl group (benzyl group), a phenylethyl group, a phenylpropyl group, a naphthylmethyl group, a naphthylethyl group, an anthryl methyl group, and an anthryl ethyl group.

Examples of the aryl group represented by $R^5$ include a phenyl group and a naphthyl group.

Specific examples of the hindered amine compound (C) include a compound represented by the following formula (3) and a compound represented by the following formula (4).

[Chem.9]

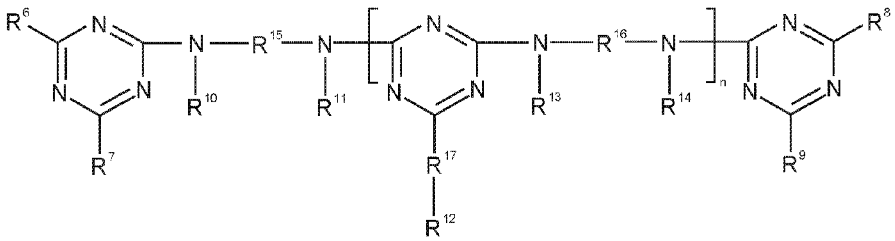

(3)

(In the formula (3), $R^6$ to $R^9$ each represent an alkylamino group, $R^{10}$ to $R^{14}$ represent a group represented by the general formula (2), $R^{15}$ and $R^{16}$ represent an alkylene group, and R $^{17}$ represents an alkyl imino group. n is an integer of 1 to 15.)

[Chem.10]

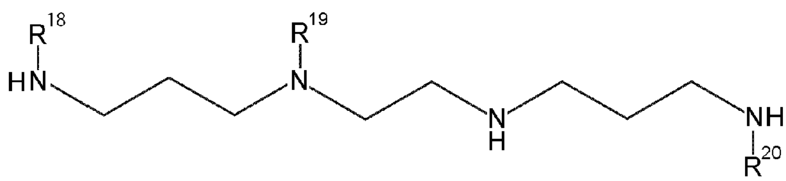

(4)

(In the formula (4), $R^{18}$ to $R^{20}$ represent a group represented by the following general formula (5).)

[Chem.11]

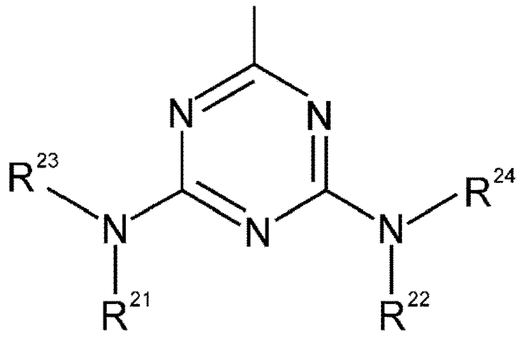

(5)

(In the formula (5), $R^{21}$ to $R^{24}$ represent a group represented by the general formula (2) or an alkyl group, and at least two of $R^{21}$ to $R^{24}$ represent a group represented by the general formula (2).)

The amine number per gram in the hindered amine compound (C) is not particularly limited but is preferably $1 \times 10^{21}$ or more.

In this case, the flame retardancy of the flame-retardant resin composition can be further improved as compared with a case where the amine number per gram in the hindered amine compound (C) is less than $1 \times 10^{21}$.

However, the amine number per gram in the hindered amine compound (C) is preferably $3 \times 10^{21}$ or less.

The hindered amine compound (C) preferably has a plurality of groups represented by the general formula (2) in one molecule.

In this case, the flame retardancy of the flame-retardant resin composition can be further improved as compared with a hindered amine compound (C) having only one group represented by the general formula (2) in one molecule.

It is also preferable that $R^5$ in the general formula (2) represent an alkyl group having 1 to 30 carbon atoms or a cycloalkyl group having 5 to 12 carbon atoms.

In this case, the flame retardancy of the flame-retardant resin composition can be further improved as compared with a case where $R^5$ in the general formula (2) is neither an alkyl group having 1 to 30 carbon atoms nor a cycloalkyl group having 5 to 12 carbon atoms.

The hindered amine compound (C) may be a solid or a liquid at 25°C, but is preferably a solid. In this case, compared with a case where the hindered amine compound (C) is a liquid at 25°C, the processability of the flame-retardant resin composition is further improved.

The decomposition temperature of the hindered amine compound (C) is not particularly limited but is preferably 240°C or higher.

In this case, compared with a case where the decomposition temperature of the hindered amine compound (C) is less than 240°C, the flame retardancy of the flame-retardant resin composition is further improved. The moldability of the flame-retardant resin composition is further improved as compared with a case where the decomposition temperature of the hindered amine compound (C) is less than 240°C. That is, the hindered amine compound (C) is difficult to be decomposed at the time of molding the flame-retardant resin composition, and the variation in the discharge amount from a molding device and the generation of air bubbles are sufficiently suppressed.

The hindered amine compound (C) may or may not contain a triazine ring. However, the hindered amine compound (C) preferably contain a triazine ring.

In this case, compared with a case where the hindered amine compound (C) does not contain a triazine ring, the flame retardancy and processability of the flame-retardant resin composition can be further improved.

The hindered amine compound (C) preferably has a decomposition temperature of 250°C or higher. In this case, the flame retardancy of the flame-retardant resin composition can be further improved as compared with a case where the decomposition temperature of the hindered amine compound (C) is less than 250°C. In addition, compared with a case where the decomposition temperature of the hindered amine compound (C) is less than 250°C, the moldability of the flame-retardant resin composition is more sufficiently improved. That is, the hindered amine compound (C) is more difficult to be decomposed at the time of molding the flame-retardant resin composition, and the variation in the discharge amount from a molding device and the generation of air bubbles are more sufficiently suppressed.

In the flame-retardant resin composition, $R^5$ in the general formula (2) preferably represents an alkyl group having 1 to 30 carbon atoms.

In this case, the flame retardancy and processability of the flame-retardant resin composition can be further improved as compared with a case where $R^5$ in the general formula (2) is not an alkyl group having 1 to 30 carbon atoms.

The blending ratio of the hindered amine compound (C) to 100 parts by mass of the base resin (A) is not particularly limited, but is preferably 0.01 parts by mass or more. In this case, the flame retardancy of the flame-retardant

resin composition can be further improved as compared with a case where the blending ratio of the hindered amine compound (C) to 100 parts by mass of the base resin (A) is less than 0.01 parts by mass.

The blending ratio of the hindered amine compound (C) to 100 parts by mass of the base resin (A) is preferably 0.05 parts by mass or more. In this case, compared with a case where the blending ratio of the hindered amine compound (C) to 100 parts by mass of the base resin (A) is less than 0.05 parts by mass, the flame retardancy of the flame-retardant resin composition can be further improved. The blending ratio of the hindered amine compound (C) to 100 parts by mass of the base resin (A) is more preferably 0.1 parts by mass or more, even more preferably 0.15 parts by mass or more, particularly preferably 0.5 parts by mass or more, from the viewpoint of improving the flame retardancy of the flame-retardant resin composition.

The blending ratio of the hindered amine compound (C) to 100 parts by mass of the base resin (A) is preferably 15 parts by mass or less. In this case, compared with a case where the blending ratio of the hindered amine compound (C) to 100 parts by mass of the base resin (A) exceeds 15 parts by mass, the processability of the flame-retardant resin composition can be further improved. The blending ratio of the hindered amine compound (C) to 100 parts by mass of the base resin (A) is more preferably 10 parts by mass or less, even more preferably 5 parts by mass or less.

In addition, the blending ratio of the hindered amine compound (C) to 100 parts by mass of the base resin (A) may be less than 0.4 parts by mass. In this case, compared with a case where the blending ratio of the hindered amine compound (C) to 100 parts by mass of the base resin (A) is 0.4 parts by mass or more, the odor of the flame-retardant resin composition can be further suppressed. Therefore, the flame-retardant resin composition is particularly useful for materials to which the suppression of odor is particularly required such as interior materials of automobiles and ducts of air conditioners. The blending ratio of the hindered amine compound (C) to 100 parts by mass of the base resin (A) is more preferably 0.3 parts by mass or less, even more preferably 0.2 parts by mass or less, from the viewpoint of suppressing the odor of the flame-retardant resin composition.

The mass ratio of the organic phosphorus compound (B) to the hindered amine compound (C), that is, the mass ratio R represented by the following formula is not particularly limited, but is preferably 5.6 or more.

$$R = m_B / m_C$$

(In the formula, $m_B$ represents the mass of the organic phosphorus compound (B), and $m_C$ represents the mass of the hindered amine compound (C).)

In this case, compared with a case where the mass ratio R is less than 5.6, the flame retardancy of the flame-retardant resin composition can be further improved.

The mass ratio R is preferably 6.3 or more.

However, the mass ratio R is preferably 11.1 or less. In this case, the flame retardancy of the flame-retardant resin composition can be further improved as compared with a case where the mass ratio R exceeds 11.1. The mass ratio R is more preferably 10.5 or less.

In the flame-retardant resin composition, it is preferable that the melting point $T_B$ (°C) of the organic phosphorus compound (B) be higher than the melting temperature T (°C) of the base resin (A), and that the melting point Tc (°C) of the hindered amine compound (C) be lower than the melting temperature T (°C) of the base resin (A). In this case, the flame-retardant resin composition can sufficiently suppress the separation of the flame retardant.

At this time, the melting point $T_B$ (°C) of the organic phosphorus compound (B) has only to be higher than the melting temperature T (°C) of the base resin (A), and the $T_B$ -T is, for example, 40°C or higher. However, $T_B$ -T is preferably 20°C or higher in consideration of the temperature stability of the flame-retardant resin composition at the time of processing.

The melting point $T_c$ (°C) of the hindered amine compound (C) is lower than the melting temperature T (°C) of the base resin (A), and $T_c$-T is, for example, -3°C or less. However, $T_c$-T is preferably -20°C or less. $T_c$-T is more preferably -30°C or less in consideration of the temperature stability of the flame-retardant resin composition at the time of processing.

In the flame-retardant resin composition, the flame retardant contains an organic phosphorus compound (B) and a hindered amine compound (C). However, the flame retardant is preferably composed of only an organic phosphorus compound (B) and a hindered amine compound (C).

(D) Drip preventing agent

The flame-retardant resin composition preferably further contains a drip preventing agent (D) in addition to the base resin (A), the organophosphorus compound (B), and the hindered amine compound (C). In this case, resin sagging (dripping) during combustion of the flame-retardant resin composition can be suppressed.

Fluorine drip preventing agent is preferable as the drip preventing agent.

The fluorine drip preventing agent contain a fluorine-containing compound containing fluorine and has only to be an fluorine drip preventing agent which can prevent resin sagging (dripping) during combustion. Examples of such fluorine-containing compounds include fluorine resins such as polytetrafluoroethylene (hereinafter referred to as "PTFE"), polyvinylidene fluoride, and polyhexafluoropropylene. The fluorine-containing compound may be a non-modified fluorine-containing compound or a modified fluorine-containing compound, but it is preferable that the fluorine-containing compound be modified. In this case, compared with a case where the fluorine-containing compound is not modified, the fluorine-containing compound is efficiently fibrillated and the dispersibility in the flame-retardant resin composition is further improved. As a result, the drip prevention function of the drip preventing agent (D) can be further improved. Further, since the melt tension of the flame-retardant resin composition becomes greater, processability and moldability of the flame-retardant resin composition can be further improved. Examples of the modified fluorine-containing compound include acid-modified polytetrafluoroethylene.

In the flame-retardant resin composition, it is preferable that the drip preventing agent (D) be further blended at a ratio of more than 0 part by mass and 5 parts by mass or less to 100 parts by mass of the base resin (A).

In this case, unlike a case where the blending ratio of the drip preventing agent (D) to 100 parts by mass of the base resin (A) is 0 mass part, the drip prevention performance is exhibited. Compared with a case where the blending ratio of the drip preventing agent (D) to 100 parts by mass of the base resin (A) exceeds 5 parts by mass, it is more sufficiently suppressed that the melt viscosity of the flame-retardant resin composition becomes too high, and the processability of the flame-retardant resin composition is further improved.

The blending ratio of the drip preventing agent (D) to 100 parts by mass of the base resin (A) is more preferably 0.2 parts by mass or more. In this case, compared with a case where the blending ratio of the drip preventing agent (D) to 100 parts by mass of the base resin (A) is less than 0.2 parts by mass, more excellent flame retardancy can be obtained in the flame-retardant resin composition. The blending ratio of the drip preventing agent (D) to 100 parts by mass of the base resin (A) is more preferably 2 parts by mass or more.

The flame-retardant resin composition does not fall under any of the following (i) and (ii).

(i) A foreign matter is confirmed on the surface of the flame-retardant resin composition when surface observation or touch confirmation is performed on the flame-retardant resin composition.

(ii) A foreign matter is confirmed on the surface of the flame-retardant resin composition when surface observation or touching confirmation is performed on the flame-retardant resin composition after the flame-retardant resin composition is left in a constant temperature bath at 85°C for 48 hours.

Here, the "foreign matter" is a flame retardant contained in the flame-retardant resin composition or a decomposition product thereof. The surface observation or touching confirmation of (i) is carried out without allowing the flame-retardant resin composition to be left for 48 hours in a constant temperature bath of 85°C.

The flame-retardant resin composition satisfies either of the following requirement (a) or (b) when performing a combustion test for automotive interior materials based on FMVSS No. 302.

(a) Self-extinguishing is observed

(b) Self-extinguishing is not observed but the combustion rate is 102 mm/min or less.

Since the hydrocarbon group represented by $X^1$ and $X^2$ in the general formula (1) is an aromatic hydrocarbon group or a phenylmethyl group (benzyl group), it is preferable that no foreign matter be confirmed on the surface when surface observation or touch confirmation is carried out on the flame-retardant resin composition after the flame-retardant resin composition is left in a constant temperature bath at 85°C and 85% RH (Relative Humidity) for 48 hours.

The flame-retardant resin composition has more excellent hydrolysis resistance. The "foreign matter" is a flame retardant contained in the flame-retardant resin composition or a decomposition product thereof.

The flame-retardant resin composition may further contain an antioxidant, a thermal deterioration inhibitor, an ultraviolet absorber, an ultraviolet deterioration inhibitor, an anti-fogging agent, a crosslinking agent, a foaming agent, a conductive filler, a heat dissipating agent, a coloring pigment, or a processing aid in a range not affecting flame retardancy and processability, as needed.

The flame-retardant resin composition can be obtained by kneading the base resin (A), the organophosphorus compound (B), and the hindered amine compound (C) . Kneading can be carried out by using a kneader capable of performing processing by applying necessary heat for melting the base resin (A), and necessary shearing for dispersing the organic phosphorus compound (B) and the hindered amine compound (C). As the kneader, for example, an open roll, a twin-screw extruder, a Banbury mixer, or a pressure kneader can be used.

<Cable>

(First embodiment of cable)

Next, a first embodiment of the cable of the present invention is described with reference to Figs. 1 and 2. Fig. 1 is a partial side view showing a first embodiment of a cable according to the present invention, and Fig. 2 is a cross-sectional view taken along the line II-II of Fig. 1.

As shown in Figs. 1 and 2, a cable 10 includes a conductor 1 as a transmission medium and an insulator 2 covering the conductor 1. The insulator 2 has a first insulating layer 3 as an insulating part covering the conductor 1 and a second insulating layer 4 as an insulating part covering the first insulating layer 3.

Here, the first insulating layer 3 and the second insulating layer 4 are composed of the flame-retardant resin composition described above, and the flame-retardant resin composition has excellent flame retardancy and can suppress the separation of the flame retardant. Therefore, the first insulating layer 3 and the second insulating layer 4 composed of the flame-retardant resin composition have excellent flame retardancy and can maintain the flame retardancy for a long period of time. Therefore, the cable 10 does not need to be replaced for a long period of time.

(Conductor)

The conductor 1 may be composed of only one element wire and may be constituted by bundling a plurality of element wires. The conductor 1 is not particularly limited on the conductor diameter or the material of the conductor, and can be appropriately determined according to the application. As the material of the conductor 1, for example, copper, aluminum or an alloy containing them is preferable, but a conductive substance such as a carbon material can be suitably used.

(Second embodiment of cable)

Next, a second embodiment of the cable of the present invention is described with reference to Fig. 3. Fig. 3 is a cross-sectional view showing an optical fiber cable as a second embodiment of the cable of the present invention.

As shown in Fig. 3, the cable 20 includes two tension members 22, 23, an optical fiber 24 as a transmission medium, and an insulator 25 covering them. Here, the optical fiber 24 is provided so as to penetrate the insulator 25. Here, the insulator 25 is composed of an insulating part covering the optical fiber 24, and the insulating part is composed of the flame-retardant resin composition constituting the first insulating layer 3 and the second insulating layer 4 in the first embodiment of the cable.

Here, the flame-retardant resin composition has excellent flame retardancy and can suppress the separation of the flame retardant. Therefore, the insulator 25 composed of the flame-retardant resin composition has excellent flame retardancy and can maintain the flame retardancy for a long period of time. Therefore, the optical fiber cable 20 does not need to be replaced for a long period of time.

<Molded body>

Next, the molded body of the present invention is described.

The molded body of the present invention contains the flame-retardant resin composition described above, and the flame-retardant resin composition has excellent flame retardancy and can suppress the separation of the flame retardant. Therefore, the molded body has excellent flame retardancy and can maintain its flame retardancy for a long period of time. Therefore, the molded body of the present invention does not need to be replaced for a long period of time. The molded body of the present invention is suitable for applications requiring a great deal of work for replacement such as, for example, a television back panel, a capacitor case, an insulating film inside a keyboard, a panel inside a heater, a flame-retardant sheet of a building, a dashboard of an automobile, a packaging material, and a housing of a household electric appliance.

The shape of the molded body of the present invention is not particularly limited. Examples of the shape of the molded body includes, for example, a sheet-like shape, a spherical shape, a rectangular parallelepiped shape, a cubic shape, a foam shape. However, the shape of the molded body is preferably a sheet-like shape.

When the shape of the molded body is a sheet-like shape, the molded body has a sheet layer composed of the flame-retardant resin composition described above. In this case, the molded body may be composed of only one sheet layer and may be composed of a laminate of a plurality of sheet layers.

The molded body can be obtained by molding the above flame-retardant resin composition using, for example, an extrusion molding method, an injection molding method, a vacuum molding method, a press molding method, a blow molding method, and an inflation molding method. The molded body may be composed of a flame-retardant resin composition alone, or, in some applications, the molded body may be composed of a combination of the flame-retardant resin composition and a reinforcing material such as glass cloth or paper.

<Flame retardant>

Next, the flame retardant of the present invention is described.

The flame retardant of the present invention includes an organic phosphorus compound (B) and a hindered amine compound (C). However, the flame retardant of the present invention does not contain a resin. The organic phosphorus compound (B) is represented by the general formula (1), and the hindered amine compound (C) has a group represented by the general formula (2).

The organic phosphorus compound (B) and the hindered amine compound (C) are as already described.

The flame retardant of the present invention can impart excellent flame retardancy to the flame-retardant resin composition when the flame-retardant resin composition is produced by kneading the flame retardant with a base resin (A) containing a polyolefin resin. The flame retardant is difficult to be separated from the base resin (A) even when kneaded with a base resin (A) containing a polyolefin resin, and separation of the flame retardant in the flame-retardant resin composition can be suppressed.

In the general formula (1), the hydrocarbon group represented by $X^1$ and $X^2$ is an aromatic hydrocarbon group. The flame retardant can further improve the hydrolysis resistance of the flame-retardant resin composition when the flame-retardant resin composition is produced by kneading the flame retardant with a base resin (A) containing a polyolefin resin.

In the flame retardant, the aromatic hydrocarbon group is preferably a phenylmethyl group.

In this case, when the flame-retardant resin composition is produced by kneading the flame retardant with a base resin (A) containing a polyolefin resin, hydrolysis resistance and flame retardancy of the flame-retardant resin composition can be more effectively improved.

In the flame retardant, the blending ratio of the organic phosphorus compound (B) and the hindered amine compound (C) is not particularly limited, but may be the same as the blending ratio of the organic phosphorus compound (B) and the hindered amine compound (C) to 100 parts by mass of the base resin (A) in the flame-retardant resin composition when it is assumed that the base resin (A) is contained in the flame retardant.

In the flame retardant, the mass ratio R of the organic phosphorus compound (B) to the hindered amine compound (C) is preferably 5.6 or more. In this case, compared with a case where the mass ratio R is less than 5.6, the flame retardant can further improve the flame retardancy of the flame-retardant resin composition.

The mass ratio R is preferably 6.3 or more.

However, the mass ratio R is preferably 11.1 or less. In this case, compared with a case where the mass ratio R exceeds 11.1, the flame retardant can further improve the flame retardancy of the flame-retardant resin composition. The mass ratio R is more preferably 10.5 or less.

The organic phosphorus compound (B) and the hindered amine compound (C) are as already described in the description of the flame-retardant resin composition.

<Flame retardant master batch>

Next, the flame retardant master batch of the present invention is described.

The flame retardant master batch of the present invention is composed of the flame-retardant resin composition.

The flame-retardant master batch of the present invention is composed of the flame-retardant resin composition, and the flame-retardant resin composition has excellent flame retardancy and can suppress the separation of the flame retardant. Therefore, even if a molded body is produced by kneading the flame retardant master batch of the present invention with other resins, the molded body has excellent flame retardancy and can suppress the separation of the flame retardant.

In the flame retardant master batch of the present invention, the blending ratio of the organic phosphorus compound (B) to 100 parts by mass of the base resin (A) is preferably 5 parts by mass or more, and more preferably 20 parts by mass or more. However, the blending ratio of the organic phosphorus compound (B) to 100 parts by mass of the base resin (A) is preferably 200 parts by mass or less. In this case, compared with a case where the blending ratio of the organic phosphorus compound (B) to 100 parts by mass of the base resin (A) exceeds 200 parts by mass, the dispersibility of the flame retardant is excellent. It is more preferable that the blending ratio of the organic phosphorus compound (B) to 100 parts by mass of the base resin (A) be 100 parts by mass or less.

In the flame retardant master batch of the present invention, the blending ratio of the hindered amine compound (C) to 100 parts by mass of the base resin (A) is preferably 0.5 parts by mass or more, and more preferably 2 parts by mass or more. However, the blending ratio of the hindered amine compound (C) to 100 parts by mass of the base resin (A) is preferably 50 parts by mass or less. In this case, compared with a case where the blending ratio of the hindered amine compound (C) to 100 parts by mass of the base resin (A) exceeds 50 parts by mass, the dispersibility of the flame retardant is excellent.

In the flame retardant master batch of the present invention, from the viewpoint of suppressing the odor of the flame retardant master batch, the blending ratio of the hindered amine compound (C) to 100 parts by mass of the base resin

(A) may be less than 0.4 parts by mass. In this case, the blending ratio of the hindered amine compound (C) to 100 parts by mass of the base resin (A) is more preferably 0.3 parts by mass or less. However, the blending ratio of the hindered amine compound (C) to 100 parts by mass of the base resin (A) is preferably 0.01 parts by mass or more. In this case, compared with a case where the blending ratio of the hindered amine compound (C) to 100 parts by mass of the base resin (A) is less than 0.01 parts by mass, the flame retardancy is more excellent.

In the flame retardant master batch, the mass ratio R of the organic phosphorus compound (B) to the hindered amine compound (C) is preferably 5.6 or more. In this case, compared with a case where the mass ratio R is less than 5.6, the flame retardant master batch can further improve the flame retardancy of the flame-retardant resin composition.

The mass ratio R is preferably 6.3 or more.

However, the mass ratio R is preferably 11.1 or less. In this case, compared with a case where the mass ratio R exceeds 11.1, the flame-retardant master batch can further improve the flame retardancy of the flame-retardant resin composition. The mass ratio R is more preferably 10.5 or less.

The organic phosphorus compound (B) and the hindered amine compound (C) are as already described in the description of the flame-retardant resin composition.

The present invention is not limited to the above embodiments. For example, in the above embodiment, the cable 10 has only one conductor 1, but the cable of the present invention is not limited to the cable having only one conductor 1. The cable may be a cable having a plurality of conductors 1 separated from each other.

In the above embodiment, the first insulating layer 3 and the second insulating layer 4 are composed of the flame-retardant resin composition, but the first insulating layer 3 is not composed of the flame-retardant resin composition, and only the second insulating layer 4 may be composed of the above flame-retardant resin composition. Alternatively, the second insulating layer 4 is not composed of the flame-retardant resin composition, and only the first insulating layer 3 may be composed of the above flame-retardant resin composition.

In the cable 20, the insulator 25 is composed of an insulating part. However, the insulator 25 may further include a coating part covering the insulating part. Here, the coating part may or may not be composed of the flame-retardant resin composition constituting the first insulating layer 3 and the second insulating layer 4 in the embodiment, but it is preferable that the coating part be composed of the flame-retardant resin composition constituting the first insulating layer 3 and the second insulating layer 4 in the embodiment.

In the above embodiment, the cable 20 has tension members 22 and 23, but in the cable of the present invention, the tension member is not necessarily required and can be omitted.

EXAMPLES

(Examples 1 to 121 and Comparative Examples 1 to 14)

A base resin (A), an organic phosphorus compound (B) and a hindered amine compound (C) were blended with the blending amount shown in Tables 1 to 22, and kneaded at 190°C using a Banbury mixer to obtain a flame-retardant resin composition. In Tables 1 to 22, the units of the blending amounts of the respective blending components are parts by mass.

As the base resin (A), the organophosphorus compound (B) and the hindered amine compound (C), the followings were specifically used.

(A) Base resin
(A1) Polypropylene (PP)
(A1-1) A block copolymer of propylene and ethylene (block PP) Product name "Novaltec BC4BSW", manufactured by Japan Polypropylene Corporation, crystalline, melting point: 165°C
(A1-2) Homopolypropylene (homo PP)
Product name "Novaltec MA3", manufactured by Japan Polypropylene Corporation, crystalline, melting point: 165°C
(A1-3) A random copolymer of propylene and ethylene (random PP) Product name "WINTEC WFW4M", manufactured by Japan Polypropylene Corporation, crystalline, melting point: 135°C (A2) Polyethylene (PE)
Product name "EXCELLEN GMH GH030", manufactured by SUMITOMO CHEMICAL COMPANY, LIMITED, crystalline, melting point: 101°C (A3) Ethylene- ethyl acrylate copolymer (EEA)
Product name "REXPEARL A1150", manufactured by Japan Polyethylene Corporation, crystalline, melting point: 100°C (A4) Propylene-$\alpha$ olefin copolymer
Product name "TAFMER PN2060", manufactured by Mitsui Chemicals, Inc., crystalline, melting point: 160°C
(A5) Ethylene-$\alpha$ olefin copolymer
Product name "TAFMER DF810", manufactured by Mitsui Chemicals, Inc., crystalline, melting point: 66°C
(A6) Hydrogenated styrene-butadiene rubber (HSBR)
Product name "DYNARON 1320P", manufactured by JSR Corporation, amorphous, glass transition point: lower than

100°C (<100°C)
(A7) Olefin elastomer
Olefin crystal-ethylene-butylene-olefin crystal block copolymer (CEBC), product name "DYNARON 6200P", manufactured by JSR Corporation, crystalline, melting point: 90°C
(A8) Maleic anhydride-modified polyolefin (maleic anhydride PO)
Product name "TAFMERMA8510", manufactured by Mitsui Chemicals, Inc., crystalline, melting point: 70°C

(B) Organic phosphorus compound

(B1) Organic phosphorus compound 1

Organic phosphorus compound represented by the following structural formula (In the general formula (1), $X^1$ and $X^2$ are phenylmethyl groups (benzyl groups), melting point: higher than 240°C (>240°C) and phosphorus content: 15 mass%

[Chem.12]

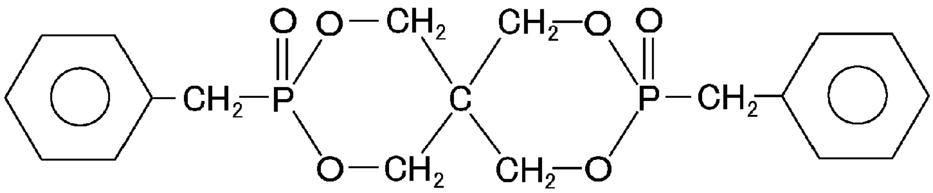

(B2) Organic phosphorus compound 2

Organic phosphorus compound represented by the following structural formula (In the general formula (1), $X^1$ and $X^2$ are methyl groups), melting point: higher than 240°C, phosphorus content: 24%

[Chem.13]

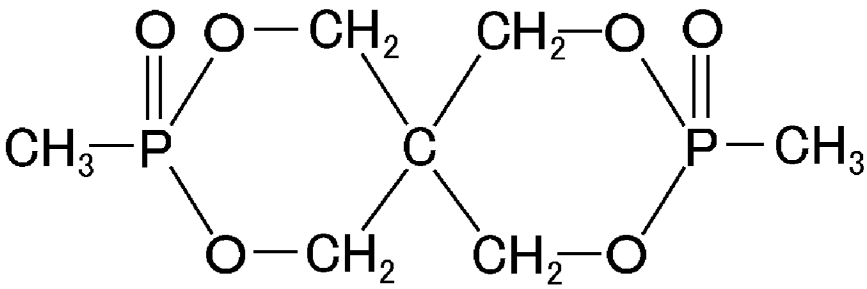

(B3) Organic phosphorus compound 3

Organic phosphorus compound represented by the following structural formula, melting point: 96°C, phosphorus content: 10 mass%

[Chem.14]

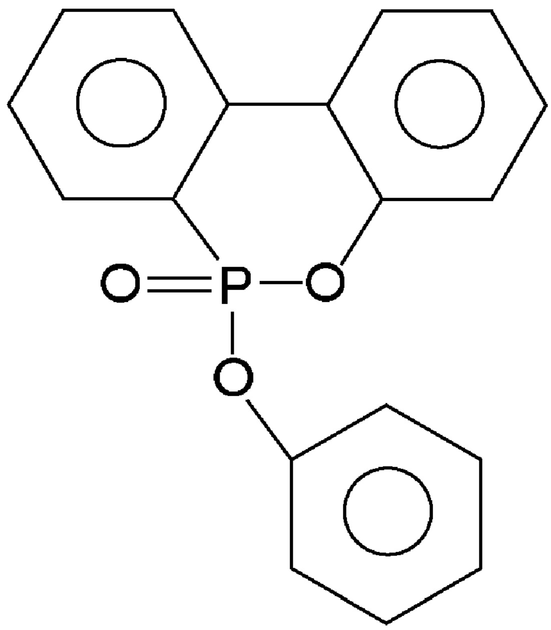

(B4) Organic phosphorus compound 4

Resorcinol bis-dixylenylphosphate represented by the following structural formula, melting point: 92°C, phosphorus content: 9.0 mass%

[Chem.15]

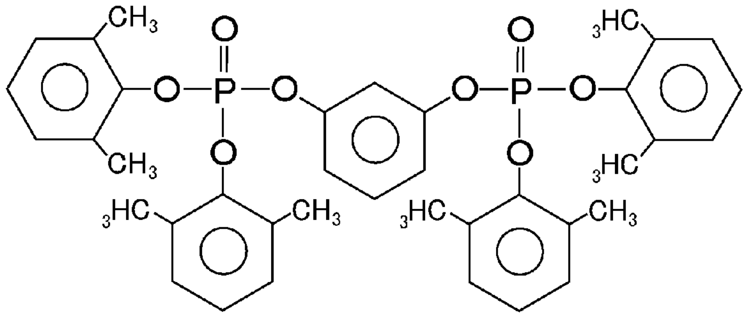

(B5) Organic phosphorus compound 5

Organic phosphorus compound represented by the following structural formula (In the general formula (1), $X^1$ and $X^2$ are ethyl groups), melting point: higher than 240°C, phosphorus content: 22 mass%

[Chem.16]

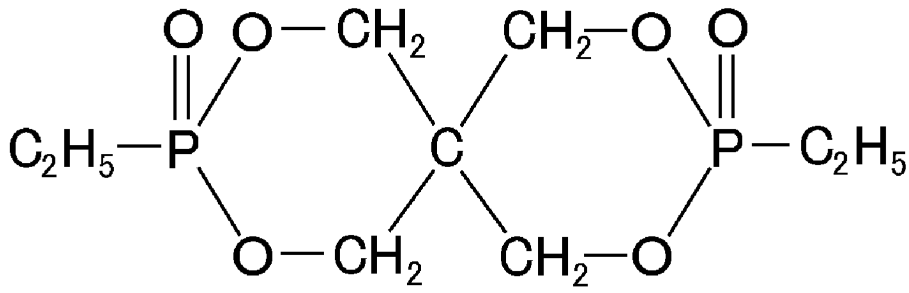

(B6) Organic phosphorus compound 6

Organic phosphorus compound represented by the following structural formula (In the general formula (1), $X^1$ and $X^2$ are propyl groups), melting point: higher than 240°C, phosphorus content: 20 mass%

[Chem.17]

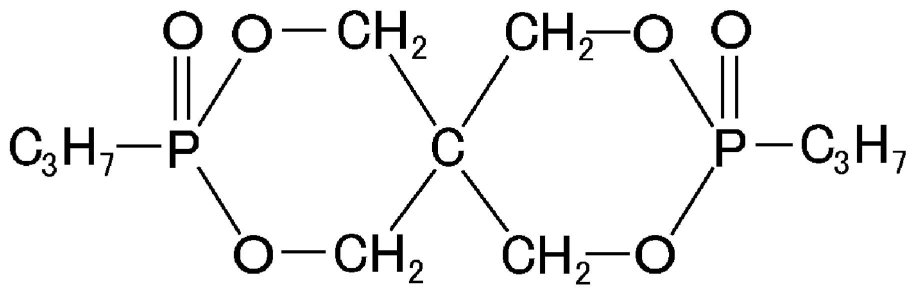

(B7) Organic phosphorus compound 7

Organic phosphorus compound represented by the following structural formula (In the general formula (1), $X^1$ and $X^2$ are phenylethyl groups), melting point: higher than 240°C, phosphorus content: 14 mass%

[Chem.18]

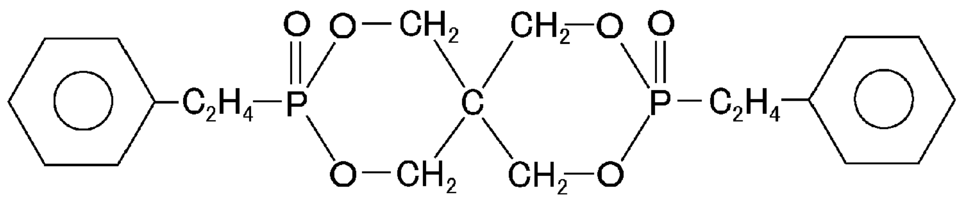

(B8) Organic phosphorus compound 8

Organic phosphorus compound represented by the following structural formula (In the general formula (1), $X^1$ and $X^2$ are phenylpropyl groups), melting point: higher than 240°C, phosphorus content: 13 mass%

[Chem.19]

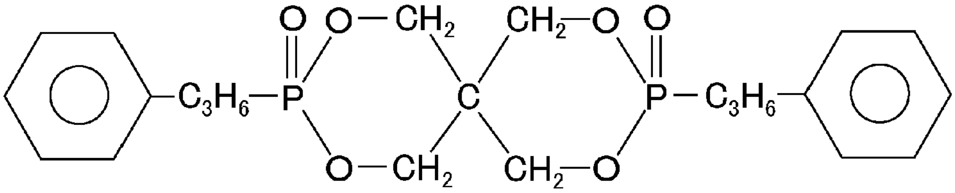

(B9) Organic phosphorus compound 9

Organic phosphorus compound represented by the following structural formula (In the general formula (1), $X^1$ and $X^2$ are naphthylmethyl groups), melting point: higher than 240°C, phosphorus content: 12 mass%

[Chem.20]

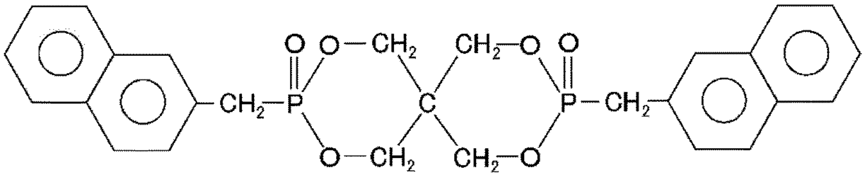

(C) Hindered amine compound

(C1) Hindered amine compound 1

Hindered amine compound represented by the following structural formula, product name "TINUVIN NOR371 FF", manufactured by BASF, melting point: 104°C, decomposition temperature: 264°C. amine number per 1g: $1.48 \times 10^{21}$ to $1.67 \times 10^{21}$, presence or absence of triazine ring: present

[Chem.21]

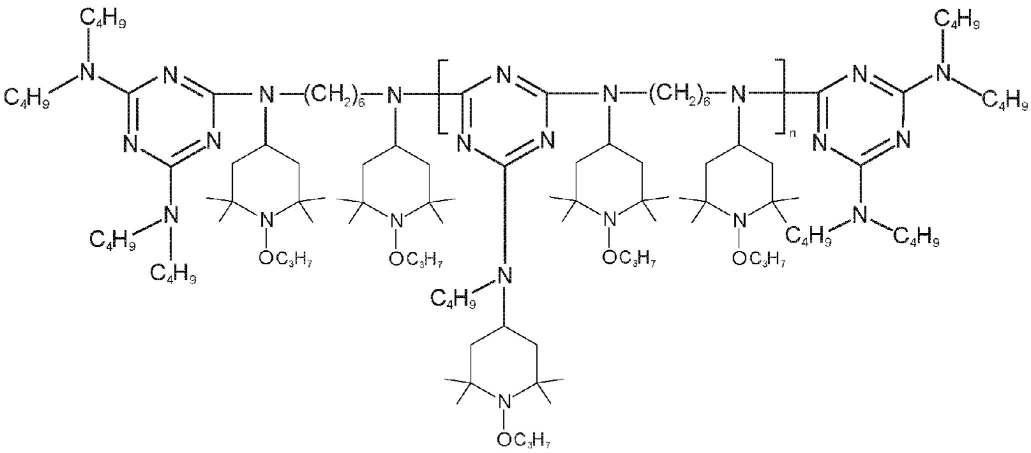

(C2) Hindered amine compound 2

Hindered amine compound represented by the following structural formula, product name "Flamestab NOR117 FF", manufactured by BASF, melting point: 121°C, decomposition temperature: 247°C, amine number per 1g: $1.6 \times 10^{21}$, presence or absence of triazine ring: present

[Chem.22]

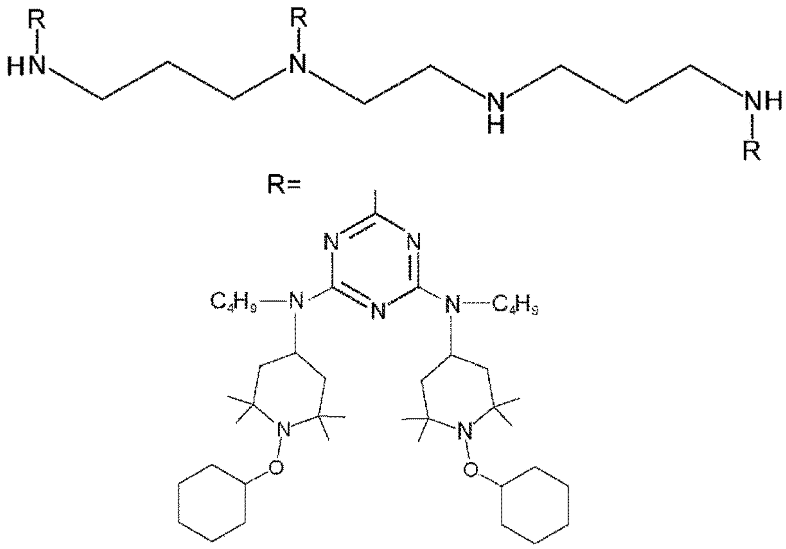

(C3) Hindered amine compound 3

Hindered amine compound represented by the following structural formula, product name "ADK STAB LA-81", manufactured by ADEKA Corporation, melting point: liquid at 25°C, decomposition temperature: 239°C, amine number per 1g: $1.77 \times 10^{21}$, and presence or absence of a triazine ring: absence

[Chem.23]

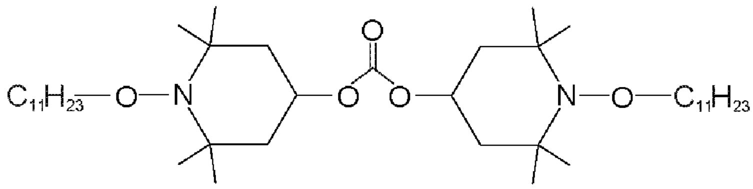

(C4) Hindered amine compound 4

Hindered amine compound represented by the following structural formula, product name "Hostavin NOW", manufactured by Clariant, melting point: 95°C, decomposition temperature: 236°C, amine number per 1g: $2.88 \times 10^{20}$, presence or absence of a triazine ring: absence

[Chem.24]

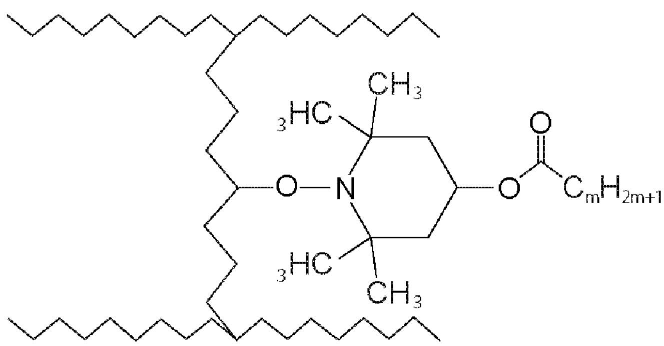

[Table 1]

| | | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|
| Composition | (A)Base resin | (A1)Polypropylene | (A1-1)Block PP | 100 | 100 | 100 | 100 | 100 | 100 | 100 | 100 | 100 | 100 | 100 |
| | (B)Organic phosphorus compound | | (B1)Organic phosphorus compound 1 (Phenylmethyl group) | 5 | | 5 | 5 | 5 | 50 | | 100 | | 150 | |
| | | | (B2)Organic phosphorus compound 2 (Methyl group) | | 5 | | | | | 50 | | 100 | | 150 |
| | | | (B3)Organic phosphorus compound 3 | | | | | | | | | | | |
| | | | (B4)Organic phosphorus compound 4 | | | | | | | | | | | |
| | (C)Hindered amine compound | | (C1)Hindered amine compound 1 | 0.5 | 0.5 | | | | 5 | 5 | 10 | 10 | 15 | 15 |
| | | | (C2)Hindered amine compound 2 | | | 0.5 | | | | | | | | |
| | | | (C3)Hindered amine compound 3 | | | | 0.5 | | | | | | | |
| | | | (C4)Hindered amine compound 4 | | | | | 0.5 | | | | | | |
| Mass ratio of organic phosphorus compound (B) to hindered amine compound (C) R(=$m_B/m_C$) | | | | 10.0 | 10.0 | 10.0 | 10.0 | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ | ○ | ○ | ○ | ○ |
| | | | Result of UL94 VTM test | VTM-2 | VTM-2 | VTM-2 | VTM-2 | VTM-2 | VTM-0 | VTM-0 | VTM-0 | VTM-0 | VTM-0 | VTM-0 |
| | Hydrolysis resistance | | Acceptable or Unacceptable | ○ | X | ○ | ○ | ○ | ○ | X | ○ | X | ○ | X |

*Examples 2, 7, 9 and 11 are for reference, not according to the claimed invention.

[Table 2]

| | | | | Example 12 | Example 13 | Comparative Example 1 | Comparative Example 2 | Example 14 | Example 15 | Comparative Example 3 | Comparative Example 4 | Example 16 | Example 17 | Comparative Example 5 | Comparative Example 6 |
|---|---|---|---|---|---|---|---|---|---|---|---|---|---|---|---|
| Composition | (A) Base resin | (A1) Polypropylene | (A1-1) Block PP | 100 | 100 | 100 | 100 | | | | | | | | |
| | | | (A1-2) Homo PP | | | | | 100 | 100 | 100 | 100 | | | | |
| | | | (A1-3) Random PP | | | | | | | | | | | | |
| | | (A2) Polyethylene | | | | | | | | | | 100 | 100 | 100 | 100 |
| | (B) Organic phosphorus compound | | (B1) Organic phosphorus compound 1 (Phenylmethyl group) | 200 | | | | 5 | | | | 5 | | | |
| | | | (B2) Organic phosphorus compound 2 (Methyl group) | | 200 | | | | 5 | | | | 5 | | |
| | | | (B3) Organic phosphorus compound 3 | | | 5 | | | | 5 | | | | 5 | |
| | | | (B4) Organic phosphorus compound 4 | | | | 5 | | | | 5 | | | | 5 |
| | (C) Hindered amine compound | | (C1) Hindered amine compound 1 | 20 | 20 | 0.5 | 0.5 | 0.5 | 0.5 | 0.5 | 0.5 | 0.5 | 0.5 | 0.5 | 0.5 |
| Mass ratio of organic phosphorus compound (B) to hindered amine compound (C) $R(=m_B/m_C)$ | | | | 10.0 | 10.0 | 10.0 | 10.0 | 10.0 | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | X | X | ○ | ○ | X | X | ○ | ○ | X | X |
| | Flame retardancy | Test sheet 1 (sheet thickness of 0.1 mm) | Acceptable or Unacceptable in FMVSS No.302 | ○ | ○ | X | X | ○ | ○ | X | X | ○ | ○ | X | X |
| | | | Result of UL94 VTM test | VTM-0 | VTM-0 | NOT | NOT | VTM-2 | VTM-2 | NOT | NOT | VTM-2 | VTM-2 | NOT | NOT |
| | Hydrolysis resistance | | Acceptable or Unacceptable | ○ | X | ○ | ○ | ○ | X | ○ | ○ | ○ | X | ○ | ○ |

*Examples 13, 15 and 17 are for reference, not according to the claimed invention.

[Table 3]

| | | | | Example 18 | Example 19 | Example 20 | Example 21 | Example 22 | Example 23 | Example 24 | Example 25 | Example 26 | Example 27 |
|---|---|---|---|---|---|---|---|---|---|---|---|---|---|
| Composition | (A)Base resin | (A1)Polypropylene | (A1-1)Block PP | 100 | 100 | 100 | 100 | 100 | 100 | 100 | 100 | 100 | 100 |
| | (B)Organic phosphorus compound | | (B1)Organic phosphorus compound 1 (Phenylmethyl group) | 2 | 2 | 2 | 2 | 4 | 4 | 4 | 4 | 6 | 6 |
| | (C)Hindered amine compound | | (C1)Hindered amine compound 1 | 0.2 | | | | 0.4 | | | | 0.6 | |
| | | | (C2)Hindered amine compound 2 | | 0.2 | | | | 0.4 | | | | 0.6 |
| | | | (C3)Hindered amine compound 3 | | | 0.2 | | | | 0.4 | | | |
| | | | (C4)Hindered amine compound 4 | | | | 0.2 | | | | 0.4 | | |
| Mass ratio of organic phosphorus compound (B) to hindered amine compound (C) $R(=m_B/m_C)$ | | | | 10.0 | 10.0 | 10.0 | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ | ○ | ○ | ○ |
| | | | Result of UL94 VTM test | NOT | NOT | NOT | NOT | NOT | NOT | NOT | NOT | VTM-2 | VTM-2 |
| | | Test sheet 2 (sheet thickness of 0.3 mm) | Acceptable or Unacceptable in FMVSS No.302 | ○ | ○ | ○ | X | ○ | ○ | ○ | X | ○ | ○ |
| | | Test sheet 3 (sheet thickness of 0.5 mm) | Acceptable or Unacceptable in FMVSS No.302 | ○ | ○ | ○ | X | ○ | ○ | ○ | X | ○ | ○ |
| | Hydrolysis resistance | | Acceptable or Unacceptable | ○ | ○ | ○ | ○ | ○ | ○ | ○ | ○ | ○ | ○ |

[Table 4]

| | | | | Example 28 | Example 29 | Example 30 | Example 31 | Example 32 | Example 33 | Example 34 | Example 35 | Example 36 |
|---|---|---|---|---|---|---|---|---|---|---|---|---|
| Composition | (A) Base resin | (A1) Polypropylene | (A1-1) Block PP | 100 | 100 | 100 | 100 | 100 | | | | |
| | | | (A1-2) Homo PP | | | | | | 100 | | | |
| | | | (A1-3) Random PP | | | | | | | 100 | | |
| | | (A2) Polyethylene | | | | | | | | | 100 | |
| | | (A3) EEA | | | | | | | | | | 100 |
| | (B) Organic phosphorus compound | | (B1) Organic phosphorus compound 1 (Phenylmethyl group) | 6 | 6 | | | | 4 | 4 | 4 | 4 |
| | | | (B2) Organic phosphorus compound 2 (Methyl group) | | | 2 | 4 | 6 | | | | |
| | (C) Hindered amine compound | | (C1) Hindered amine compound 1 | | | 0.2 | 0.4 | 0.6 | 0.4 | 0.4 | 0.4 | 0.4 |
| | | | (C2) Hindered amine compound 2 | | | | | | | | | |
| | | | (C3) Hindered amine compound 3 | 0.6 | | | | | | | | |
| | | | (C4) Hindered amine compound 4 | | 0.6 | | | | | | | |
| Mass ratio of organic phosphorus compound (B) to hindered amine compound (C) $R(=m_B/m_C)$ | | | | 10.0 | 10.0 | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ | ○ | ○ |
| | | | Result of UL94 VTM test | VTM-2 | VTM-2 | NOT | NOT | VTM-2 | NOT | NOT | NOT | NOT |
| | | Test sheet 2 (sheet thickness of 0.3 mm) | Acceptable or Unacceptable in FMVSS No.302 | ○ | ○ | ○ | ○ | ○ | ○ | ○ | ○ | ○ |
| | | Test sheet 3 (sheet thickness of 0.5 mm) | Acceptable or Unacceptable in FMVSS No.302 | ○ | ○ | ○ | ○ | ○ | ○ | ○ | ○ | ○ |
| | Hydrolysis resistance | | Acceptable or Unacceptable | ○ | ○ | X | X | X | ○ | ○ | ○ | ○ |

*Examples 30, 31 and 32 are for reference, not according to the claimed invention.

[Table 5]

| | | | | Example 37 | Example 38 | Example 39 | Example 40 | Example 41 | Example 42 |
|---|---|---|---|---|---|---|---|---|---|
| Composition | (A) Base resin | (A1) Polypropylene | (A1-1) Block PP | | | | | | |
| | | | (A1-2) Homo PP | 80 | | 80 | 80 | 80 | |
| | | | (A1-3) Random PP | | | | | | |
| | | (A2) Polyethylene | | | 80 | | | | 80 |
| | | (A3) EEA | | | | | | | |
| | | (A4) Propylene-α olefin copolymer | | 20 | | | | | |
| | | (A5) Ethylene-α olefin copolymer | | | 20 | | | | |
| | | (A6) Stylene elastomer | Hhydrogenated styrene-butadiene rubber | | | 20 | | | |
| | | (A7) Olefin elastomer | CEBC | | | | 20 | | |
| | | (A8) Acid-modified PO | Maleic anhydride-modified PO | | | | | 20 | 20 |
| | (B) Organic phosphorus compound | | (B1) Organic phosphorus compound 1 (Phenylmethyl group) | 4 | 4 | 4 | 4 | 4 | 4 |
| | (C) Hindered amine compound | | (C1) Hindered amine compound 1 | 0.4 | 0.4 | 0.4 | 0.4 | 0.4 | 0.4 |
| Mass ratio of organic phosphorus compound (B) to hindered amine compound (C) $R(=m_B/m_C)$ | | | | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ |
| | | | Result of UL94 VTM test | NOT | NOT | NOT | NOT | NOT | NOT |
| | | Test sheet 2 (sheet thickness of 0.3 mm) | Acceptable or Unacceptable in FMVSS No.302 | ○ | ○ | ○ | ○ | ○ | ○ |
| | | Test sheet 3 (sheet thickness of 0.5 mm) | Acceptable or Unacceptable in FMVSS No.302 | ○ | ○ | ○ | ○ | ○ | ○ |
| | Hydrolysis resistance | | Acceptable or Unacceptable | ○ | ○ | ○ | ○ | ○ | ○ |

[Table 6]

| | | | | Example 43 | Example 44 | Example 45 | Example 46 | Example 47 | Example 48 | Example 49 |
|---|---|---|---|---|---|---|---|---|---|---|
| Composition | (A) Base resin | (A1) Polypropylene | (A1-1) Block PP | 100 | 100 | 100 | 100 | 100 | 100 | 100 |
| | (B) Organic phosphorus compound | | (B1) Organic phosphorus compound 1 (Phenylmethyl group) | 0.1 | 200 | 200 | 4 | 4 | 4 | 4 |
| | (C) Hindered amine compound | | (C1) Hindered amine compound 1 | 0.01 | 20 | 50 | 0.4 | | | |
| | | | (C2) Hindered amine compound 2 | | | | | 0.4 | | |
| | | | (C3) Hindered amine compound 3 | | | | | | 0.4 | |
| | | | (C4) Hindered amine compound 4 | | | | | | | 0.4 |
| Mass ratio of organic phosphorus compound (B) to hindered amine compound (C) $R(=m_B/m_C)$ | | | | 10.0 | 10.0 | 4.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ |
| | | | Result of UL94 VTM test | NOT | VTM-0 | VTM-0 | NOT | NOT | NOT | NOT |
| | | Test sheet 2 (sheet thickness of 0.3 mm) | Acceptable or Unacceptable in FMVSS No.302 | X | ○ | ○ | ○ | ○ | ○ | ○ |
| | | Test sheet 3 (sheet thickness of 0.5 mm) | Acceptable or Unacceptable in FMVSS No.302 | X | ○ | ○ | ○ | ○ | ○ | ○ |
| | Hydrolysis resistance | | Acceptable or Unacceptable | ○ | ○ | ○ | ○ | ○ | ○ | ○ |
| | Processability | 250°C | Acceptable or Unacceptable | - | - | - | ○ | X | X | X |
| | | 240°C | Acceptable or Unacceptable | - | - | - | ○ | ○ | X | X |
| | | 230°C | Acceptable or Unacceptable | - | - | - | ○ | ○ | ○ | ○ |

[Table 7]

| | | | | Example 22 | Example 31 | Example 50 | Example 51 | Example 52 | Example 53 | Example 54 |
|---|---|---|---|---|---|---|---|---|---|---|
| Composition | (A)Base resin | (A1)Polypropylene | (A1-1)Block PP | 100 | 100 | 100 | 100 | 100 | 100 | 100 |
| | (B)Organic phosphorus compound | | (B1)Organic phosphorus compound 1 (Phenylmethyl group) | 4 | | | | | | |
| | | | (B2)Organic phosphorus compound 2 (Methyl group) | | 4 | | | | | |
| | | | (B5)Organic phosphorus compound 5 (Ethyl group) | | | 4 | | | | |
| | | | (B6)Organic phosphorus compound 6 (Propyl group) | | | | 4 | | | |
| | | | (B7)Organic phosphorus compound 7 (Phenylethyl group) | | | | | 4 | | |
| | | | (B8)Organic phosphorus compound 8 (Phenylpropyl group) | | | | | | 4 | |
| | | | (B9)Organic phosphorus compound 9 (Naphtylmethyl group) | | | | | | | 4 |
| | (C)Hindered amine compound | | (C1)Hindered amine compound 1 | 0.4 | 0.4 | 0.4 | 0.4 | 0.4 | 0.4 | 0.4 |
| Mass ratio of organic phosphorus compound (B) to hindered amine compound (C) $R(=m_B/m_C)$ | | | | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ |
| | | | Result of UL94 VTM test | NOT | NOT | NOT | NOT | NOT | NOT | NOT |
| | | Test sheet 2 (sheet thickness of 0.3 mm) | Acceptable or Unacceptable in FMVSS No.302 | ○ | ○ | ○ | ○ | ○ | ○ | ○ |
| | | Test sheet 3 (sheet thickness of 0.5 mm) | Acceptable or Unacceptable in FMVSS No.302 | ○ | ○ | ○ | ○ | ○ | ○ | ○ |
| | Hydrolysis resistance | | Acceptable or Unacceptable | ○ | X | X | X | ○ | ○ | ○ |

*Examples 31, 50 and 51 are for reference, not according to the claimed invention.

[Table 8]

| | | | | Example 55 | Example 56 | Example 57 | Example 58 |
|---|---|---|---|---|---|---|---|
| Composition | (A) Base resin | (A1) Polypropylene | (A1-1) Block PP | 100 | 100 | 100 | 100 |
| | (B) Organic phosphorus compound | | (B1) Organic phosphorus compound 1 (Phenylmethyl group) | 10 | 10 | 10 | 10 |
| | (C) Hindered amine compound | | (C1) Hindered amine compound 1 | 1 | | | |
| | | | (C2) Hindered amine compound 2 | | 1 | | |
| | | | (C3) Hindered amine compound 3 | | | 1 | |
| | | | (C4) Hindered amine compound 4 | | | | 1 |
| Mass ratio of organic phosphorus compound (B) to hindered amine compound (C) R(= $m_B/m_C$) | | | | 10.0 | 10.0 | 10.0 | 10.0 |
| Characteristic Evaluation | Flame retardant separation suppression effect | | Acceptable or Unacceptable | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ |
| | | | Result of UL94 VTM test | VTM-0 | VTM-0 | VTM-0 | VTM-0 |
| | Hydrolysis resistance | | Acceptable or Unacceptable | ○ | ○ | ○ | ○ |
| | Coloring Property | | Acceptable or Unacceptable | X | X | ○ | ○ |

[Table 9]

| | | | | Example 1 | Example 2 | Example 59 | Example 60 | Example 61 | Example 62 | Example 63 | Example 3 | Example 4 | Example 5 |
|---|---|---|---|---|---|---|---|---|---|---|---|---|---|
| Composition | (A) Base resin | (A1) Polypropylene | (A1-1) Block PP | 100 | 100 | 100 | 100 | 100 | 100 | 100 | 100 | 100 | 100 |
| | (B) Organic phosphorus compound | | (B1) Organic phosphorus compound 1 (Phenylmethyl group) | 5 | | | | | | | 5 | 5 | 5 |
| | | | (B2) Organic phosphorus compound 2 (Methyl group) | | 5 | | | | | | | | |
| | | | (B5) Organic phosphorus compound 5 (Ethyl group) | | | 5 | | | | | | | |
| | | | (B6) Organic phosphorus compound 6 (Propyl group) | | | | 5 | | | | | | |
| | | | (B7) Organic phosphorus compound 7 (Phenylethyl group) | | | | | 5 | | | | | |
| | | | (B8) Organic phosphorus compound 8 (Phenylpropyl group) | | | | | | 5 | | | | |
| | | | (B9) Organic phosphorus compound 9 (Naphtylmethyl group) | | | | | | | 5 | | | |
| | (C) Hindered amine compound | | (C1) Hindered amine compound 1 | 0.5 | 0.5 | 0.5 | 0.5 | 0.5 | 0.5 | 0.5 | | | |
| | | | (C1) Hindered amine compound2 | | | | | | | | 0.5 | | |
| | | | (C1) Hindered amine compound3 | | | | | | | | | 0.5 | |
| | | | (C1) Hindered amine compound4 | | | | | | | | | | 0.5 |
| Mass ratio of organic phosphorus compound (B) to hindered amine compound (C) $R(=m_B/m_C)$ | | | | 10.0 | 10.0 | 10.0 | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ | ○ | ○ | ○ |
| | | | Result of UL94 VTM test | VTM-2 | VTM-2 | VTM-2 | VTM-2 | VTM-2 | VTM-2 | VTM-2 | VTM-2 | VTM-2 | VTM-2 |
| | | Test sheet 2 (sheet thickness of 0.3 mm) | Acceptable or Unacceptable in FMVSS No.302 | ○ | ○ | ○ | ○ | ○ | ○ | ○ | ○ | ○ | ○ |
| | | Test sheet 3 (sheet thickness of 0.5 mm) | Acceptable or Unacceptable in FMVSS No.302 | ○ | ○ | ○ | ○ | ○ | ○ | ○ | ○ | ○ | ○ |
| | Hydrolysis resistance | | Acceptable or Unacceptable | ○ | X | X | X | ○ | ○ | ○ | ○ | ○ | ○ |

*Examples 2, 59 and 60 are for reference, not according to the claimed invention.

[Table 10]

| | | | | Example 64 | Example 65 | Example 66 | Example 67 | Example 68 | Example 69 | Example 70 | Example 55 | Example 56 | Example 57 |
|---|---|---|---|---|---|---|---|---|---|---|---|---|---|
| Composition | (A)Base resin | (A1)Polypropylene | (A1-1)Block PP | 100 | 100 | 100 | 100 | 100 | 100 | 100 | 100 | 100 | 100 |
| | (B)Organic phosphorus compound | | (B1)Organic phosphorus compound 1 (Phenylmethyl group) | 10 | | | | | | | 10 | 10 | 10 |
| | | | (B2)Organic phosphorus compound 2 (Methyl group) | | 10 | | | | | | | | |
| | | | (B5)Organic phosphorus compound 5 (Ethyl group) | | | 10 | | | | | | | |
| | | | (B6)Organic phosphorus compound 6 (Propyl group) | | | | 10 | | | | | | |
| | | | (B7)Organic phosphorus compound 7 (Phenylethyl group) | | | | | 10 | | | | | |
| | | | (B8)Organic phosphorus compound 8 (Phenylpropyl group) | | | | | | 10 | | | | |
| | | | (B9)Organic phosphorus compound 9 (Naphtylmethyl group) | | | | | | | 10 | | | |
| | (C)Hindered amine compound | | (C1)Hindered amine compound 1 | 1 | 1 | 1 | 1 | 1 | 1 | 1 | | | |
| | | | (C1)Hindered amine compound2 | | | | | | | | 1 | | |
| | | | (C1)Hindered amine compound3 | | | | | | | | | 1 | |
| | | | (C1)Hindered amine compound4 | | | | | | | | | | 1 |
| Mass ratio of organic phosphorus compound (B) to hindered amine compound (C) R(=$m_B/m_C$) | | | | 10.0 | 10.0 | 10.0 | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ | ○ | ○ | ○ |
| | | | Result of UL94 VTM test | VTM-0 | VTM-0 | VTM-0 | VTM-0 | VTM-0 | VTM-0 | VTM-0 | VTM-0 | VTM-0 | VTM-0 |
| | | Test sheet 2 (sheet thickness of 0.3 mm) | Acceptable or Unacceptable in FMVSS No.302 | ○ | ○ | ○ | ○ | ○ | ○ | ○ | ○ | ○ | ○ |
| | | Test sheet 3 (sheet thickness of 0.5 mm) | Acceptable or Unacceptable in FMVSS No.302 | ○ | ○ | ○ | ○ | ○ | ○ | ○ | ○ | ○ | ○ |
| | Hydrolysis resistance | | Acceptable or Unacceptable | ○ | X | X | X | ○ | ○ | ○ | ○ | ○ | ○ |

*Examples 65, 66 and 67 are for reference, not according to the claimed invention.

[Table 11]

| | | | | Example 71 | Example 64 | Example 72 | Example 73 | Example 74 | Example 75 | Example 76 |
|---|---|---|---|---|---|---|---|---|---|---|
| Composition | (A) Base resin | (A1) Polypropylene | (A1-1) Block PP | 100 | 100 | 100 | 100 | 100 | 100 | 100 |
| | (B) Organic phosphorus compound | | (B1) Organic phosphorus compound 1 (Phenylmethyl group) | 10 | 10 | 10 | 10 | 10 | 10 | 10 |
| | (C) Hindered amine compound | | (C1) Hindered amine compound 1 | 0.9 | 1.0 | 1.2 | 1.4 | 1.6 | 1.8 | 2.0 |
| Mass ratio of organic phosphorus compound (B) to hindered amine compound (C) $R(=m_B/m_C)$ | | | | 11.1 | 10.0 | 8.3 | 7.1 | 6.3 | 5.6 | 5.0 |
| Characteristic Evaluation | Flame retardant separation suppression effect | | Acceptable or Unacceptable | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ |
| | | | Result of UL94 VTM test | VTM-0 | VTM-0 | VTM-0 | VTM-0 | VTM-0 | VTM-0 | VTM-2 |
| | Hydrolysis resistance | | Acceptable or Unacceptable | ○ | ○ | ○ | ○ | ○ | ○ | ○ |

[Table 12]

| | | | | Example 77 | Example 56 | Example 78 | Example 79 | Example 80 | Example 81 | Example 82 |
|---|---|---|---|---|---|---|---|---|---|---|
| Composition | (A) Base resin | (A1) Polypropylene | (A1-1) Block PP | 100 | 100 | 100 | 100 | 100 | 100 | 100 |
| | (B) Organic phosphorus compound | | (B1) Organic phosphorus compound 1 (Phenylmethyl group) | 10 | 10 | 10 | 10 | 10 | 10 | 10 |
| | (C) Hindered amine compound | | (C1) Hindered amine compound2 | 0.9 | 1.0 | 1.2 | 1.4 | 1.6 | 1.8 | 2.0 |
| (B)/(C) | | | | 11.1 | 10.0 | 8.3 | 7.1 | 6.3 | 5.6 | 5.0 |
| Characteristic Evaluation | Flame retardant separation suppression effect | | Acceptable or Unacceptable | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ |
| | | | Result of UL94 VTM test | VTM-0 | VTM-0 | VTM-0 | VTM-0 | VTM-0 | VTM-0 | VTM-2 |
| | Hydrolysis resistance | | Acceptable or Unacceptable | ○ | ○ | ○ | ○ | ○ | ○ | ○ |

[Table 13]

| | | | | Comparative Example 7 | Comparative Example 8 | Comparative Example 9 | Comparative Example 10 |
|---|---|---|---|---|---|---|---|
| Composition | (A) Base resin | (A1) Polypropylene | (A1-1) Block PP | 100 | 100 | 100 | 100 |
| | (B) Organic phosphorus compound | | (B1) Organic phosphorus compound 1 (Phenylmethyl group) | | | | |
| | | | (B2) Organic phosphorus compound 2 (Methyl group) | | | | |
| | | | (B3) Organic phosphorus compound 3 | | | | |
| | | | (B4) Organic phosphorus compound 4 | | | | |
| | (C) Hindered amine compound | | (C1) Hindered amine compound 1 | 5 | | | |
| | | | (C2) Hindered amine compound 2 | | 5 | | |
| | | | (C3) Hindered amine compound 3 | | | 5 | |
| | | | (C4) Hindered amine compound 4 | | | | 5 |
| Mass ratio of organic phosphorus compound (B) to hindered amine compound (C) R(=$m_B/m_C$) | | | | 0.0 | 0.0 | 0.0 | 0.0 |
| Characteristic Evaluation | Flame retardant separation suppression effect | | Acceptable or Unacceptable | X | X | X | X |
| | Flame retardancy | Test sheet 1 (sheet thickness of 0.1 mm) | Acceptable or Unacceptable in FMVSS No.302 | X | X | X | X |
| | | | Result of UL94 VTM test | NOT | NOT | NOT | NOT |

[Table 14]

| | | | | Example 83 | Example 84 | Example 85 | Example 86 | Example 87 |
|---|---|---|---|---|---|---|---|---|
| Composition | (A) Base resin | (A1) Polypropylene | (A1-1) Block PP | 100 | 100 | 100 | 100 | 100 |
| | (B) Organic phosphorus compound | | (B1) Organic phosphorus compound 1 (Phenylmethyl group) | 3 | | 3 | 3 | 3 |
| | | | (B2) Organic phosphorus compound 2 (Methyl group) | | 3 | | | |
| | | | (B3) Organic phosphorus compound 3 | | | | | |
| | | | (B4) Organic phosphorus compound 4 | | | | | |
| | (C) Hindered amine compound | | (C1) Hindered amine compound 1 | 0.3 | 0.3 | | | |
| | | | (C2) Hindered amine compound 2 | | | 0.3 | | |
| | | | (C3) Hindered amine compound 3 | | | | 0.3 | |
| | | | (C4) Hindered amine compound 4 | | | | | 0.3 |
| Mass ratio of organic phosphorus compound (B) to hindered amine compound (C) $R(=m_B/m_C)$ | | | | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ |
| | Hydrolysis resistance | | Acceptable or Unacceptable | ○ | X | ○ | ○ | ○ |
| | Odor | | Acceptable or Unacceptable | 1 | 1 | 1 | 1 | 1 |

*Example 84 is for reference, not according to the claimed invention.

[Table 15]

| | | | | Example 88 | Example 89 | Example 90 | Example 91 | Example 92 | Example 93 | Example 94 | Example 95 |
|---|---|---|---|---|---|---|---|---|---|---|---|
| Composition | (A) Base resin | (A1) Polypropylene | (A1-1) Block PP | 100 | 100 | 100 | 100 | 100 | 100 | 100 | 100 |
| | (B) Organic phosphorus compound | | (B1) Organic phosphorus compound 1 (Phenylmethyl group) | 2 | 2 | 2 | 2 | 3 | 3 | 3 | 3 |
| | (C) Hindered amine compound | | (C1) Hindered amine compound 1 | 0.2 | | | | 0.3 | | | |
| | | | (C2) Hindered amine compound 2 | | 0.2 | | | | 0.3 | | |
| | | | (C3) Hindered amine compound 3 | | | 0.2 | | | | 0.3 | |
| | | | (C4) Hindered amine compound 4 | | | | 0.2 | | | | 0.3 |
| Mass ratio of organic phosphorus compound (B) to hindered amine compound (C) $R(=m_B/m_C)$ | | | | 10.0 | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ | ○ |
| | | Test sheet 2 (sheet thickness of 0.3 mm) | Acceptable or Unacceptable in FMVSS No.302 | ○ | ○ | ○ | X | ○ | ○ | ○ | X |
| | | Test sheet 3 (sheet thickness of 0.5 mm) | Acceptable or Unacceptable in FMVSS No.302 | ○ | ○ | ○ | X | ○ | ○ | ○ | X |
| | Hydrolysis resistance | | Acceptable or Unacceptable | ○ | ○ | ○ | ○ | ○ | ○ | ○ | ○ |
| | Odor | | Acceptable or Unacceptable | 1 | 1 | 1 | 1 | 1 | 1 | 1 | 1 |

[Table 16]

| | | | | Example 46 | Example 47 | Example 48 | Example 49 | Example 26 | Example 27 |
|---|---|---|---|---|---|---|---|---|---|
| Composition | (A) Base resin | (A1) Polypropylene | (A1-1) Block PP | 100 | 100 | 100 | 100 | 100 | 100 |
| | (B) Organic phosphorus compound | | (B1) Organic phosphorus compound 1 (Phenylmethyl group) | 4 | 4 | 4 | 4 | 6 | 6 |
| | (C) Hindered amine compound | | (C1) Hindered amine compound 1 | 0.4 | | | | 0.6 | |
| | | | (C2) Hindered amine compound 2 | | 0.4 | | | | 0.6 |
| | | | (C3) Hindered amine compound 3 | | | 0.4 | | | |
| | | | (C4) Hindered amine compound 4 | | | | 0.4 | | |
| Mass ratio of organic phosphorus compound (B) to hindered amine compound (C) $R(=m_B/m_C)$ | | | | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ |
| | | Test sheet 2 (sheet thickness of 0.3 mm) | Acceptable or Unacceptable in FMVSS No.302 | ○ | ○ | ○ | X | ○ | ○ |
| | | Test sheet 3 (sheet thickness of 0.5 mm) | Acceptable or Unacceptable in FMVSS No.302 | ○ | ○ | ○ | X | ○ | ○ |
| | Hydrolysis resistance | | Acceptable or Unacceptable | ○ | ○ | ○ | ○ | ○ | ○ |
| | Odor | | Acceptable or Unacceptable | 3 | 3 | 3 | 3 | 3 | 3 |

[Table 17]

| | | | | Example 28 | Example 29 | Example 96 | Example 31 | Example 32 | Example 97 | Example 98 | Example 99 | Example 100 |
|---|---|---|---|---|---|---|---|---|---|---|---|---|
| Composition | (A) Base resin | (A1) Polypropylene | (A1-1) Block PP | 100 | 100 | 100 | 100 | 100 | | | | |
| | | | (A1-2) Homo PP | | | | | | 100 | | | |
| | | | (A1-3) Random PP | | | | | | | 100 | | |
| | | (A2) Polyethylene | | | | | | | | | 100 | |
| | | (A3) EEA | | | | | | | | | | 100 |
| | (B) Organic phosphorus compound | | (B1) Organic phosphorus compound 1 (Phenylmethyl group) | 6 | 6 | | | | 3 | 3 | 3 | 3 |
| | | | (B2) Organic phosphorus compound 2 (Methyl group) | | | 2 | 4 | 6 | | | | |
| | (C) Hindered amine compound | | (C1) Hindered amine compound 1 | | | 0.2 | 0.4 | 0.6 | 0.3 | 0.3 | 0.3 | 0.3 |
| | | | (C2) Hindered amine compound 2 | | | | | | | | | |
| | | | (C3) Hindered amine compound 3 | 0.6 | | | | | | | | |
| | | | (C4) Hindered amine compound 4 | | 0.6 | | | | | | | |
| Mass ratio of organic phosphorus compound (B) to hindered amine compound (C) $R(=m_B/m_C)$ | | | | 10.0 | 10.0 | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ | ○ | ○ |
| | | Test sheet 2 (sheet thickness of 0.3 mm) | Acceptable or Unacceptable in FMVSS No.302 | ○ | ○ | ○ | ○ | ○ | ○ | ○ | ○ | ○ |
| | | Test sheet 3 (sheet thickness of 0.5 mm) | Acceptable or Unacceptable in FMVSS No.302 | ○ | ○ | ○ | ○ | ○ | ○ | ○ | ○ | ○ |
| | Hydrolysis resistance | | Acceptable or Unacceptable | ○ | ○ | X | X | X | ○ | ○ | ○ | ○ |
| | Odor | | Acceptable or Unacceptable | 3 | 3 | 1 | 3 | 3 | 1 | 1 | 1 | 1 |

*Examples 96, 31 and 32 are for reference, not according to the claimed invention.

[Table 18]

| | | | | Example 101 | Example 102 | Example 103 | Example 104 | Example 105 | Example 106 |
|---|---|---|---|---|---|---|---|---|---|
| Composition | (A) Base resin | (A1) Polypropylene | (A1-1) Block PP | | | | | | |
| | | | (A1-2) Homo PP | 80 | | 80 | 80 | 80 | |
| | | | (A1-3) Random PP | | | | | | |
| | | (A2) Polyethylene | | | 80 | | | | 80 |
| | | (A3) EEA | | | | | | | |
| | | (A4) Propylene-α olefin copolymer | | 20 | | | | | |
| | | (A5) Ethylene-α olefin copolymer | | | 20 | | | | |
| | | (A6) Stylene elastomer | Hhydrogenated styrene-butadiene rubber | | | 20 | | | |
| | | (A7) Olefin elastomer | CEBC | | | | 20 | | |
| | | (A8) Acid-modified PO | Maleic anhydride-modified PO | | | | | 20 | 20 |
| | (B) Organic phosphorus compound | | (B1) Organic phosphorus compound 1 (Phenylmethyl group) | 3 | 3 | 3 | 3 | 3 | 3 |
| | (C) Hindered amine compound | | (C1) Hindered amine compound 1 | 0.3 | 0.3 | 0.3 | 0.3 | 0.3 | 0.3 |
| Mass ratio of organic phosphorus compound (B) to hindered amine compound (C) $R(=m_B/m_C)$ | | | | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ |
| | | Test sheet 2 (sheet thickness of 0.3 mm) | Acceptable or Unacceptable in FMVSS No.302 | ○ | ○ | ○ | ○ | ○ | ○ |
| | | Test sheet 3 (sheet thickness of 0.5 mm) | Acceptable or Unacceptable in FMVSS No.302 | ○ | ○ | ○ | ○ | ○ | ○ |
| | Hydrolysis resistance | | Acceptable or Unacceptable | ○ | ○ | ○ | ○ | ○ | ○ |
| | Odor | | Acceptable or Unacceptable | 1 | 1 | 1 | 1 | 1 | 1 |

[Table 19]

| | | | | Example 43 | Example 107 | Example 108 | Example 109 | Example 110 |
|---|---|---|---|---|---|---|---|---|
| Composition | (A) Base resin | (A1) Polypropylene | (A1-1) Block PP | 100 | 100 | 100 | 100 | 100 |
| | (B) Organic phosphorus compound | | (B1) Organic phosphorus compound 1 (Phenylmethyl group) | 0.1 | 3 | 3 | 3 | 3 |
| | (C) Hindered amine compound | | (C1) Hindered amine compound 1 | 0.01 | 0.3 | | | |
| | | | (C2) Hindered amine compound 2 | | | 0.3 | | |
| | | | (C3) Hindered amine compound 3 | | | | 0.3 | |
| | | | (C4) Hindered amine compound 4 | | | | | 0.3 |
| Mass ratio of organic phosphorus compound (B) to hindered amine compound (C) R(=$m_B/m_C$) | | | | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ |
| | | Test sheet 2 (sheet thickness of 0.3 mm) | Acceptable or Unacceptable in FMVSS No.302 | X | ○ | ○ | ○ | ○ |
| | | Test sheet 3 (sheet thickness of 0.5 mm) | Acceptable or Unacceptable in FMVSS No.302 | X | ○ | ○ | ○ | ○ |
| | Hydrolysis resistance | | Acceptable or Unacceptable | ○ | ○ | ○ | ○ | ○ |
| | Processability | 250°C | Acceptable or Unacceptable | - | ○ | X | X | X |
| | | 240°C | Acceptable or Unacceptable | - | ○ | ○ | X | X |
| | | 230°C | Acceptable or Unacceptable | - | ○ | ○ | ○ | ○ |
| | Odor | | Acceptable or Unacceptable | 1 | 1 | 1 | 1 | 1 |

[Table 20]

| | | | | Example 111 | Example 112 | Example 113 | Example 114 | Example 115 | Example 116 | Example 117 |
|---|---|---|---|---|---|---|---|---|---|---|
| Composition | (A) Base resin | (A1) Polypropylene | (A1-1) Block PP | 100 | 100 | 100 | 100 | 100 | 100 | 100 |
| | (B) Organic phosphorus compound | | (B1) Organic phosphorus compound 1 (Phenylmethyl group) | 3 | | | | | | |
| | | | (B2) Organic phosphorus compound 2 (Methyl group) | | 3 | | | | | |
| | | | (B5) Organic phosphorus compound 5 (Ethyl group) | | | 3 | | | | |
| | | | (B6) Organic phosphorus compound 6 (Propyl group) | | | | 3 | | | |
| | | | (B7) Organic phosphorus compound 7 (Phenylethyl group) | | | | | 3 | | |
| | | | (B8) Organic phosphorus compound 8 (Phenylpropyl group) | | | | | | 3 | |
| | | | (B9) Organic phosphorus compound 9 (Naphtylmethyl group) | | | | | | | 3 |
| | (C) Hindered amine compound | | (C1) Hindered amine compound 1 | 0.3 | 0.3 | 0.3 | 0.3 | 0.3 | 0.3 | 0.3 |
| Mass ratio of organic phosphorus compound (B) to hindered amine compound (C) $R(=m_B/m_C)$ | | | | 10.0 | 10.0 | 10.0 | 10.0 | 10.0 | 10.0 | 10.0 |
| Characteristic Evaluation | Flame retardant separation suppression effect | | Acceptable or Unacceptable | ○ | ○ | ○ | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ | ○ | ○ | ○ |
| | | Test sheet 2 (sheet thickness of 0.3 mm) | Acceptable or Unacceptable in FMVSS No.302 | ○ | ○ | ○ | ○ | ○ | ○ | ○ |
| | | Test sheet 3 (sheet thickness of 0.5 mm) | Acceptable or Unacceptable in FMVSS No.302 | ○ | ○ | ○ | ○ | ○ | ○ | ○ |
| | Hydrolysis resistance | | Acceptable or Unacceptable | ○ | X | X | X | ○ | ○ | ○ |
| | Odor | | Acceptable or Unacceptable | 1 | 1 | 1 | 1 | 1 | 1 | 1 |

*Examples 112, 113 and 114 are for reference, not according to the claimed invention.

[Table 21]

| | | | | Example 118 | Example 119 | Example 120 | Example 121 |
|---|---|---|---|---|---|---|---|
| Composition | (A) Base resin | (A1) Polypropylene | (A1-1) Block PP | 100 | 100 | 100 | 100 |
| | (B) Organic phosphorus compound | | (B1) Organic phosphorus compound 1 (Phenylmethyl group) | 3 | 3 | 3 | 3 |
| | (C) Hindered amine compound | | (C1) Hindered amine compound 1 | 0.3 | | | |
| | | | (C2) Hindered amine compound 2 | | 0.3 | | |
| | | | (C3) Hindered amine compound 3 | | | 0.3 | |
| | | | (C4) Hindered amine compound 4 | | | | 0.3 |
| Mass ratio of organic phosphorus compound (B) to hindered amine compound (C) $R(=m_B/m_C)$ | | | | 10.0 | 10.0 | 10.0 | 10.0 |
| Characteristic Evaluation | Flame retardant separation suppression effect | | Acceptable or Unacceptable | ○ | ○ | ○ | ○ |
| | Flame retardancy | Test sheet 1 (sheet thickness of 0.1 mm) | Acceptable or Unacceptable in FMVSS No.302 | ○ | ○ | ○ | ○ |
| | Hydrolysis resistance | | Acceptable or Unacceptable | ○ | ○ | ○ | ○ |
| | Coloring Property | | Acceptable or Unacceptable | X | X | ○ | ○ |
| | Odor | | Acceptable or Unacceptable | 1 | 1 | 1 | 1 |

[Table 22]

| | | | | Comparative Example 11 | Comparative Example 12 | Comparative Example 13 | Comparative Example 14 |
|---|---|---|---|---|---|---|---|
| Composition | (A)Base resin | (A1)Polypropylene | (A1-1)Block PP | 100 | 100 | 100 | 100 |
| | (B)Organic phosphorus compound | | (B1)Organic phosphorus compound 1 (Phenylmethyl group) | | | | |
| | | | (B2)Organic phosphorus compound 2 (Methyl group) | | | | |
| | | | (B3)Organic phosphorus compound 3 | | | | |
| | | | (B4)Organic phosphorus compound 4 | | | | |
| | (C)Hindered amine compound | | (C1)Hindered amine compound 1 | 0.3 | | | |
| | | | (C2)Hindered amine compound 2 | | 0.3 | | |
| | | | (C3)Hindered amine compound 3 | | | 0.3 | |
| | | | (C4)Hindered amine compound 4 | | | | 0.3 |
| Mass ratio of organic phosphorus compound (B) to hindered amine compound (C) $R(=m_B/m_C)$ | | | | 0.0 | 0.0 | 0.0 | 0.0 |
| Characteristic Evaluation | Flame retardant separation suppression effect | | Acceptable or Unacceptable | X | X | X | X |
| | Flame retardancy | Test sheet 1 (sheet thickness of 0.1 mm) | Acceptable or Unacceptable in FMVSS No.302 | X | X | X | X |
| | Odor | | Acceptable or Unacceptable | 2 | 2 | 2 | 2 |

[CHARACTERISTIC EVALUATION]

For the flame-retardant resin compositions of Examples 1 to 121 and Comparative Examples 1 to 14 obtained as described above, an effect of suppressing the separation of the flame retardant and flame retardancy were evaluated as follows. For the flame-retardant resin compositions of Examples 1 to 121 and Comparative Examples 1 to 6, hydrolysis resistance was evaluated as follows. Further, for the flame-retardant resin compositions of Examples 26 to 29, 31 to 32, 43, 46 to 49, 83 to 121 and Comparative Examples 11 to 14, an odor was evaluated as follows. For the flame-retardant resin compositions of Examples 46 to 49 and 107 to 110, processability was also evaluated, and for the flame-retardant resin compositions of Examples 55 to 58 and 118 to 121, coloring at the time of deterioration was also evaluated.

<Test sheet>

A test sheet 1 having a thickness of 0.1 mm was produced in the following manner in order to evaluate the effect of suppressing separation of the flame retardant, flame retardancy, hydrolysis resistance and odor. That is, after the flame-retardant resin compositions of Examples 1 to 121 and Comparative Examples 1 to 14 were kneaded at 190°C with a Banbury mixer, a test sheet 1 having a dimension of 350 mm × 100 mm × 0.1 mm (thickness) was produced by press forming. For the flame-retardant resin compositions of Examples 1 to 5, 18 to 57, 59 to 70 and 88 to 117, test sheets 2 and 3 similar to the test sheet 1 except that the thickness was 0.3 mm or 0.5 mm were produced in order to evaluate flame retardancy.

<Effect of suppressing separation of flame retardant>

For the test sheet 1, surface observation or touch confirmation was carried out, and surface observation or touch confirmation was carried out after the test sheet 1 was left in a constant temperature bath at 85°C for 48 hours. And then, it was checked whether or not the foreign matter is confirmed on the surface of the test sheet 1. The foreign matter was used as an indicator of whether the flame retardant is separated. For the test sheet 1, determination of "O" or "X" was made. The results are shown in Tables 1 to 22. When determination of "O" was made for the test sheet 1, the test sheet 1 was judged to be acceptable, and when determination of "X" was made for the test sheet 1, the test sheet 1 was judged to be unacceptable.

(Determination Criteria)

O: the test sheet 1 does not fall under any of the following (i) and (ii).
X: the test sheet 1 falls under at least one of the following (i) and (ii).

(i) A foreign matter is confirmed on the surface of the test sheet 1 when surface observation or touch confirmation is performed on the test sheet 1.
(ii) A foreign matter is confirmed on the surface of the test sheet 1 when surface observation or touch confirmation is performed on the test sheet 1 after the test sheet 1 is left in a constant temperature bath at 85°C for 48 hours.

<Flame-retardancy>

(1) Evaluation of flame retardancy based on a combustion test for automobile interior materials based on FMVSS (Federal Motor-Vehicle Safety Standard) No. 302

For the test sheets 1 to 3, flame retardancy was evaluated by performing a combustion test for automobile interior materials based on FMVSS No. 302. Specifically, the test sheets 1 to 3 were held horizontally with a pair of U-shaped metal jigs, and the flame having a size of 38 mm was contacted to the rear surface of one end of the test sheets 1 to 3 for 15 seconds. Confirmation for the presence or absence of self-extinguishing and calculation for the combustion time (combustion speed) to the distance 254 mm between the A target line and the B target line displayed on the jig was performed. Each U-shaped metal jig was composed of two parallel extension parts separated from each other and a connection part connecting the extension parts, and both edge parts of the test sheet were fixed along the longitudinal direction of the test sheets 1 to 3 by the two extension parts. In one extension part of the two extension parts, the A target line and the B target line are displayed such that they are separated by 254 mm and cross the extension part (along the direction orthogonal to the extending direction).
On the basis of the following determination criteria, determination of "O" or "X" was made for the test sheets 1 to 3.

The results are shown in Tables 1 to 22. The test sheets 1 to 3 determined to be "O" were judged to be acceptable in terms of flame-retardancy, and the test sheets 1 to 3 determined to be "X" were judged to be unacceptable in terms of flame-retardancy.

(Determination Criteria)

O: Self-extinguishing is observed, or no self-extinguishing is observed and a combustion speed is 102 mm/minute or less.
X: No self-extinguishing is observed and a combustion speed exceeds 102 mm/minute.

(2) Evaluation of flame retardancy based on a VTM test of the UL 94 standard.
For each of Examples 1 to 82 and Comparative Examples 1 to 10, five test sheets 1 were prepared, and the flame retardancy was evaluated by performing a VTM test of the UL 94 standard for these five test sheets 1. Specifically, the test sheet 1 was wound around a mandrel having a diameter of 13 mm and a sample composed of a cylindrical body having a length of 350 mm was prepared. One end of the sample was fixed with a clamp, and the sample was arranged so that its central axis is parallel to the vertical direction. At this time, the sample was arranged so that the target line is marked at a position of 125 mm from the lower end of the sample. On the other hand, an absorbent cotton was spread and arranged below the sample. A tip of a burner was arranged at a position of 10 mm from the lower end of the sample for three seconds, and was brought into contact with the lower end of the sample. After the flame contact, the burner was separated from the sample and the afterflame time t1 was measured. After the remaining flame stopped, the burner was immediately moved under the sample, the flame was again brought into contact with the sample. The burner was separated from the sample after the flame contact. The afterflame time t2 and the afterglow time t3 were measured. Further, it was observed whether the sample was burnt up to the target line or whether the sample made the absorbent cotton ignite by dropping a smoking substance or a dropping product.
Then, the test sheet 1 was evaluated on the basis of the following evaluation rank. The results are shown in Tables 1 to 14. The flame retardancy becomes higher in the order of NOT, VTM-2, VTM-1 and VTM-0.

(Evaluation rank)

VTM-0

· In all of the test sheets 1, t1 or t2 is 10 seconds or less.
· t1 + t2 (the sum of the afterflame times for 10 times of contact flame) for 5 samples is 50 seconds or less.
· In all of the test sheets 1, t2 + t3 is 30 seconds or less.
· The sample is not burnt up to the target line, and the absorbent cotton is not ignited by a smoking substance or a dropping product.

VTM-1

· In all of the test sheets 1, t1 or t2 is 30 seconds or less.
· t1 +t2 (the sum of the afterflame times for 10 times of contact flame) for 5 samples is 250 seconds or less.
· In all of the test sheets 1, t2 + t3 is 60 seconds or less.
· The sample is not burnt up to the target line, and the absorbent cotton is not ignited by a smoking substance or a dropping product.

VTM -2

· In all of the test sheets 1, t1 or t2 is 30 seconds or less.
· t1 + t2 (the sum of the afterflame times for 10 times of contact flame) for 5 samples is 250 seconds or less
· In all of the test sheets 1, t2 + t3 is 60 seconds or less

· The sample is not burnt up to the target line, and the absorbent cotton is ignited by a smoking substance or a dropping product. NOT

Test sheet 1 does not fall under any of VTM-0, VTM-1 and VTM-2

<Hydrolysis resistance>

For each of Examples 1 to 121 and Comparative Examples 1 to 6, surface observation or touch confirmation was performed on the test sheet 1 after the test sheet 1 was left in a constant temperature bath at 85°C and 85% RH for 48 hours, and it was checked whether a foreign matter is confirmed on the surface of the test sheet 1. The foreign matter was used as an index of hydrolysis resistance. On the basis of the following determination criteria, determination of "O" or "X" was made for the test sheet 1. The results are shown in Tables 1 to 12 and Tables 14 to 21.

(Determination Criteria)

O: No foreign matter is confirmed on the surface of the test sheet 1.
X: A foreign matter is confirmed on the surface of the test sheet 1.

<Odor>

odor was determined for the test sheet 1 of Examples 26 to 29, 31 to 32, 43, 46 to 49, 83 to 121 and Comparative Examples 11 to 14 on the basis of the following determination criteria. The results are shown in Tables 14 to 22.

(Determination Criteria)

1: Odor is not almost felt.
2: Slight odor is felt.
3: Strong odor is felt.

<Processability>

A T-die was connected to a single-screw extruder (product name "LABO PLASTOMILLS", manufactured by Toyo Seiki Seisaku-sho, Ltd.), and each of flame-retardant resin compositions of Examples 46 to 49 and 107 to 110 was charged into a single-screw extruder to prepare a sheet for evaluation of processability having a thickness of 0.1mm. At this time, the discharge amount and the take-up speed of the sheet were made constant. The sheet for evaluation of processability was prepared for each of the processing temperatures of 230°C, 240°C and 250°C in the single-screw extruder. The presence or absence of the formation of holes in the sheet for evaluation of processability was checked during 30 minutes extrusion, and the presence or absence of the formation of holes was used as an index of processability. Here, the formation of holes suggests a decrease in processability due to the variation of the discharge amount or the generation of air bubbles. On the basis of the following determination criteria, determination of "O" or "X" for the sheet for evaluation of processability was performed. The results are shown in Tables 6 and 19.

(Determination Criteria)

O: No hole formation is confirmed in the sheet for evaluation of processability.
X: Hole formation is confirmed in the sheet for evaluation of processability.

<Coloring Property at the time of deterioration>

In order to evaluate the coloring property, the test sheets 4 were further prepared in the same manner as the test sheet 1 except that the flame-retardant resin compositions of Examples 55 to 58 and 118 to 121 were used and the thickness was set to 1 mm. Surface observation was performed on the test sheet 4 after the test sheet 4 is left in a constant

temperature bath at 85°C for 5 days, and it was checked whether the sheet is discolored. On the basis of the following determination criteria, determination of "O" or "X" was performed for the test sheets 4. The results are shown in Tables 8 and 21.

(Determination Criteria)

O: No discoloration is observed in the sheet.
X: Discoloration is observed in the sheet.

From the results shown in Tables 1 to 22, it was found that the evaluation results of flame retardancy for any of the test sheets (test sheets 1) having a thickness of 0.1 mm were "O" in Examples 1 to 121, and Examples 1 to 121 were acceptable in terms of flame retardancy. In contrast, it was found that the evaluation results of flame retardancy for any of the test sheets (test sheets 1) having a thickness of 0.1 mm were "X" in Comparative Examples 1to 14, and Comparative Examples 1 to 14 were not acceptable in terms of flame retardancy.

From the results shown in Tables 1 to 22, it was found that any evaluation results of the separation suppressing effect of the flame retardant were "O" in Examples 1 to 121, and Examples 1 to 121 were acceptable in terms of the separation suppressing effect of the flame retardant. In contrast, it was found that any evaluation results of the separation suppressing effect of the flame retardant were "X" in Comparative Examples 1 to 14, and Comparative Examples 1 to 14 were not acceptable in terms of the separation suppressing effect of the flame retardant.

From the above, it was confirmed that the flame-retardant resin composition in accordance with the present invention has excellent flame retardancy and can suppress the separation of the flame retardant.

From the results shown in Tables 14 to 22, the determination results of odor were "1" or "2" in any of Examples 43 and 83 to 121. In contrast, in any of Examples 26 to 29, 31 to 32, 46 to 49, and Comparative Examples 11 to 14, the determination results of odor were "3". Therefore, it was found that the flame-retardant resin composition in which the blending ratio of the hindered amine compound (C) to 100 parts by mass of the base resin (A) is less than 0.4 parts by mass can suppress odor more than the flame-retardant resin composition in which the blending ratio of the hindered amine compound (C) to 100 parts by mass of the base resin (A) is 0.4 parts by mass or more.

From the results shown in Table 11, for example, in any of Examples 64 and 71 to 75, the evaluation result of the flame retardancy of the test sheets (test sheets 1) having a thickness of 0.1 mm (evaluation result based on the VTM test of the UL 94 standard) were "VTM-0". In contrast, in Example 76 where the mass ratio R is less than 5.6, the evaluation result of the flame retardancy of the test sheet (test sheet 1) having a thickness of 0.1 mm was "VTM-2". From the results shown in Table 12, the evaluation results of the test sheets (test sheets 1) having a thickness of 0.1 mm (evaluation result based on the VTM test of the UL 94 standard) were "VTM-0" in any of Examples 56 and 77 to 81 in which the mass ratio R is 5.6 or more. In contrast, in Example 82 where the mass ratio R is less than 5.6, the evaluation result of the flame retardancy of the test sheet (test sheet 1) having a thickness of 0.1 mm was "VTM-2". From this, it was found that a test sheet having a mass ratio R of 5.6 or more can further improve flame retardancy compared with a test sheet having a mass ratio R of less than 5.6.

EXPLANATIONS OF REFERRENCE NUMERALS

1 conductor (transmission medium)
2, 25 insulator
3 first insulating layer (insulation part)
4 second insulating layer (insulating part)
10, 20 Cable
24 optical fiber (transmission medium)

## Claims

**1.** A flame-retardant resin composition comprising:

a base resin (A) containing a polyolefin resin; and
a flame retardant including an organic phosphorus compound (B) and a hindered amine compound (C), the

organic phosphorous compound (B) being represented by the following general formula (1) and the hindered amine compound (C) containing a group represented by the following general formula (2):

[Chem.1]

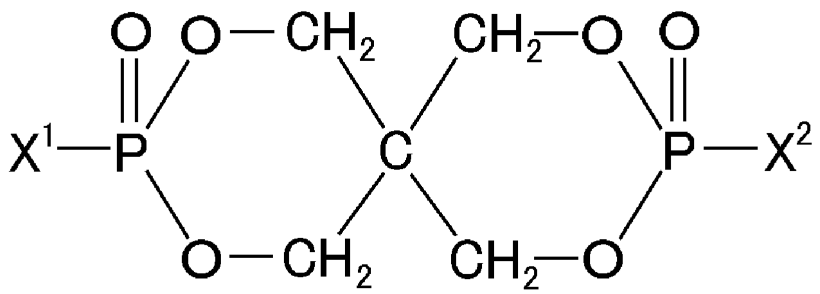

(1)

where, in the general formula (1), $X^1$ and $X^2$ each represent an aromatic hydrocarbon group, and may be the same or different;

[Chem.2]

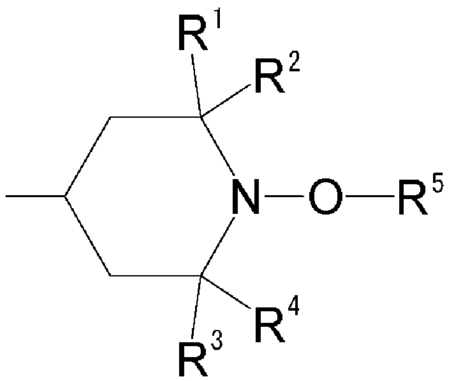

(2)

where, in the general formula (2), $R^1$ to $R^4$ each independently represent an alkyl group having 1 to 8 carbon atoms, $R^5$ represents an alkyl group having 1 to 50 carbon atoms, a cycloalkyl group having 5 to 12 carbon atoms, an aralkyl group having 7 to 25 carbon atoms, or an aryl group having 6 to 12 carbon atoms.

2. The flame-retardant resin composition according to claim 1, wherein the aromatic hydrocarbon group is a phenylmethyl group.

3. The flame-retardant resin composition according to claim 1 or 2, wherein the hindered amine compound (C) is blended at a ratio of less than 0.4 parts by mass to 100 parts by mass of the base resin (A).

4. The flame-retardant resin composition according to any one of claims 1 to 3, wherein a mass ratio of the organic phosphorus compound (B) to the hindered amine compound (C) is 5.6 or more.

5. The flame-retardant resin composition according to claim 4, wherein the mass ratio of the organic phosphorus compound (B) to the hindered amine compound (C) is 11.1 or less.

6. The flame-retardant resin composition according to any one of claims 1 to 5, wherein the hindered amine compound (C) contains a triazine ring.

7. The flame-retardant resin composition according to any one of claims 1 to 5, wherein the hindered amine compound (C) does not contain a triazine ring.

8. The flame-retardant resin composition according to any one of claims 1 to 7, wherein a melting point of the organic phosphorus compound (B) is higher than a melting temperature of the base resin (A), and a melting point of the

hindered amine compound (C) is lower than a melting temperature of the base resin (A).

**9.** The flame-retardant resin composition according to any one of claims 1, 2 and 4 to 8, wherein the blending ratio of the hindered amine compound (C) to 100 parts by mass of the base resin (A) is 0.5 parts by mass or more.

**10.** The flame-retardant resin composition according to any one of claims 1 to 9, wherein the blending ratio of the organic phosphorus compound (B) to 100 parts by mass of the base resin (A) is 5 parts by mass or more.

**11.** The flame-retardant resin composition according to any one of claims 1 to 10, satisfying either of the following requirements (a) or (b) when a combustion test for automotive interior materials based on FMVSS No. 302 is performed,

(a) self-extinguishing is observed;
(b) self-extinguishing is not observed but the combustion rate is 102 mm/minute or less.

**12.** Use of the flame-retardant resin composition according to any one of claims 1 to 11 as an insulating part of a cable.

**13.** Use of the flame-retardant resin composition according to any one of claims 1 to 11 as flame-retardant master batch.

**14.** A cable comprising:

a transmission medium composed of a conductor or an optical fiber; and
an insulator covering the transmission medium, the insulator containing an insulating part composed of the flame-retardant resin composition according to any one of claims 1 to 11.

**15.** A molded body comprising the flame-retardant resin composition according to any one of claims 1 to 11.

**16.** The molded body according to claim 15, further comprising at least one sheet layer containing the flame-retardant resin composition.

**17.** A flame retardant comprising:

an organic phosphorus compound (B) represented by the following general formula (1); and
a hindered amine compound (C) represented by the following general formula (2):

[Chem.3]

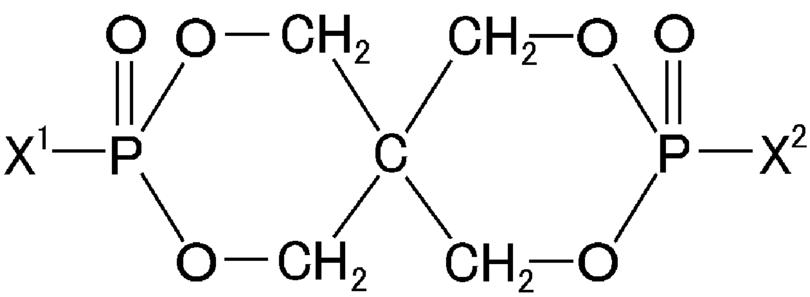

(1)

where, in the general formula (1), $X^1$ and $X^2$ each represent an aromatic hydrocarbon group, and may be the same or different; and

[Chem.4]

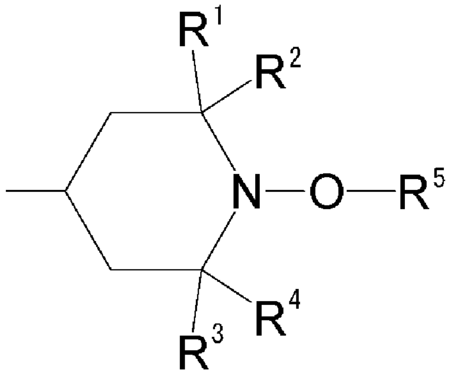

(2)

where, in the general formula (2), $R^1$ to $R^4$ each independently represent an alkyl group having 1 to 8 carbon atoms, $R^5$ represents an alkyl group having 1 to 50 carbon atoms, a cycloalkyl group having 5 to 12 carbon atoms, an aralkyl group having 7 to 25 carbon atoms, or an aryl group having 6 to 12 carbon atoms.

**Patentansprüche**

**1.** Flammhemmende Harzzusammensetzung, umfassend:

ein Basisharz (A), das ein Polyolefinharz enthält; und
ein Flammschutzmittel, das eine organische Phosphorverbindung (B) und eine gehinderte Aminverbindung (C) enthält, wobei die organische Phosphorverbindung (B) durch die folgende allgemeine Formel (1) dargestellt wird und die gehinderte Aminverbindung (C) eine Gruppe enthält, die durch die folgende allgemeine Formel (2) dargestellt wird:

[Chem.1]

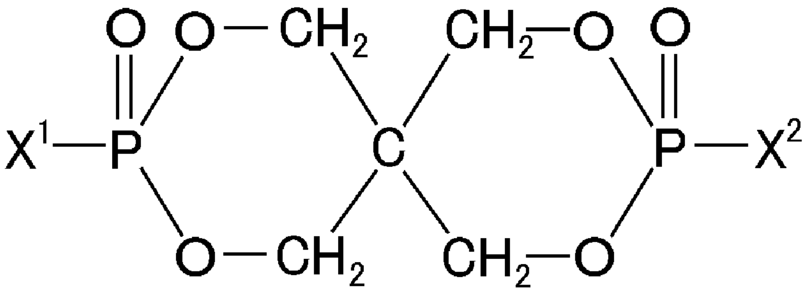

(1)

wobei in der allgemeinen Formel (1) $X^1$ und $X^2$ jeweils eine aromatische Kohlenwasserstoffgruppe darstellen und gleich oder verschieden sein können;

[Chem.2]

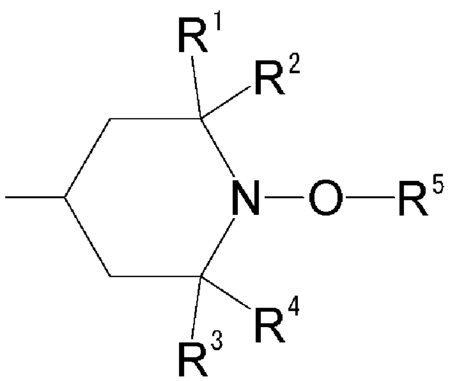

(2)

wobei in der allgemeinen Formel (2) $R^1$ bis $R^4$ jeweils unabhängig voneinander eine Alkylgruppe mit 1 bis 8

Kohlenstoffatomen darstellen, $R^5$ eine Alkylgruppe mit 1 bis 50 Kohlenstoffatomen, eine Cycloalkylgruppe mit 5 bis 12 Kohlenstoffatomen, eine Aralkylgruppe mit 7 bis 25 Kohlenstoffatomen oder eine Arylgruppe mit 6 bis 12 Kohlenstoffatomen darstellt.

**2.** Flammhemmende Harzzusammensetzung gemäß Anspruch 1, wobei die aromatische Kohlenwasserstoffgruppe eine Phenylmethylgruppe ist.

**3.** Flammhemmende Harzzusammensetzung gemäß Anspruch 1 oder 2, wobei die gehinderte Aminverbindung (C) in einem Verhältnis von weniger als 0,4 Masseteile auf 100 Masseteile des Basisharzes (A) beigemischt ist.

**4.** Flammhemmende Harzzusammensetzung gemäß einem der Ansprüche 1 bis 3, wobei ein Massenverhältnis von der organischen Phosphorverbindung (B) zu der gehinderten Aminverbindung (C) 5,6 oder mehr beträgt.

**5.** Flammhemmende Harzzusammensetzung gemäß Anspruch 4, wobei das Massenverhältnis von der organischen Phosphorverbindung (B) zu der gehinderten Aminverbindung (C) 11,1 oder weniger beträgt.

**6.** Flammhemmende Harzzusammensetzung gemäß einem der Ansprüche 1 bis 5, wobei die gehinderte Aminverbindung (C) einen Triazinring enthält.

**7.** Flammhemmende Harzzusammensetzung gemäß einem der Ansprüche 1 bis 5, wobei die gehinderte Aminverbindung (C) keinen Triazinring enthält.

**8.** Flammhemmende Harzzusammensetzung gemäß einem der Ansprüche 1 bis 7, wobei ein Schmelzpunkt der organischen Phosphorverbindung (B) höher als eine Schmelztemperatur des Basisharzes (A) ist und ein Schmelzpunkt der gehinderten Aminverbindung (C) niedriger als eine Schmelztemperatur des Basisharzes (A) ist.

**9.** Flammhemmende Harzzusammensetzung gemäß einem der Ansprüche 1, 2 und 4 bis 8, wobei das Mischungsverhältnis der gehinderten Aminverbindung (C) auf 100 Masseteile des Basisharzes (A) 0,5 Masseteile oder mehr beträgt.

**10.** Flammhemmende Harzzusammensetzung gemäß einem der Ansprüche 1 bis 9, wobei das Mischungsverhältnis der organischen Phosphorverbindung (B) auf 100 Masseteile des Basisharzes (A) 5 Masseteile oder mehr beträgt.

**11.** Flammhemmende Harzzusammensetzung gemäß einem der Ansprüche 1 bis 10, die eine der folgenden Anforderungen (a) oder (b) erfüllt, wenn ein Verbrennungstest für Automobilinnenraummaterialien gemäß FMVSS Nr. 302 durchgeführt wird,

(a) Selbstlöschung wird beobachtet;
(b) Selbstlöschung wird nicht beobachtet, aber die Verbrennungsgeschwindigkeit beträgt 102 mm/Minute oder weniger.

**12.** Verwendung der flammhemmenden Harzzusammensetzung gemäß einem der Ansprüche 1 bis 11 als isolierenden Teil eines Kabels.

**13.** Verwendung der flammhemmenden Harzzusammensetzung gemäß einem der Ansprüche 1 bis 11 als flammhemmenden Masterbatch.

**14.** Kabel, umfassend:

ein Übertragungsmedium, gebildet aus einem Leiter oder einer optischen Faser; und
einen Isolator, der das Übertragungsmedium bedeckt,
wobei der Isolator einen isolierenden Teil enthält, der aus der flammhemmenden Harzzusammensetzung gemäß einem der Ansprüche 1 bis 11 gebildet ist.

**15.** Formkörper, umfassend die flammhemmende Harzzusammensetzung gemäß einem der Ansprüche 1 bis 11.

**16.** Formkörper gemäß Anspruch 15, ferner umfassend mindestens eine Schicht, die die flammhemmende Harzzusammensetzung enthält.

**17.** Flammschutzmittel, umfassend:

eine organische Phosphorverbindung (B), die durch die folgende allgemeine Formel (1) dargestellt wird; und eine gehinderte Aminverbindung (C), die durch die folgende allgemeine Formel (2) dargestellt wird:

[Chem.3]

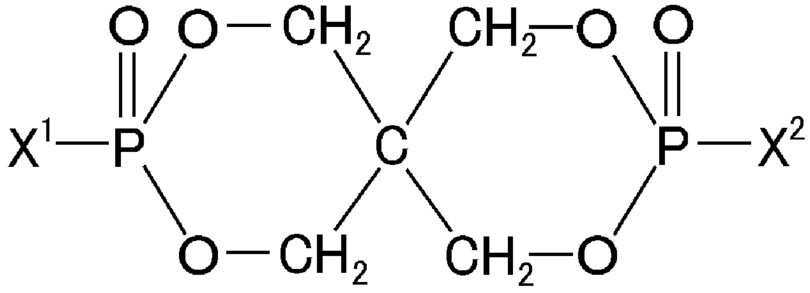

(1)

wobei in der allgemeinen Formel (1) $X^1$ und $X^2$ jeweils eine aromatische Kohlenwasserstoffgruppe darstellen und gleich oder verschieden sein können; und

[Chem.4]

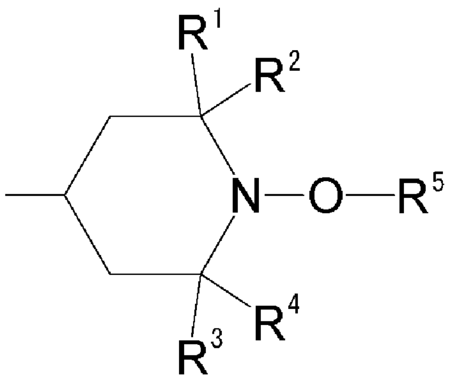

(2)

wobei in der allgemeinen Formel (2) $R^1$ bis $R^4$ jeweils unabhängig voneinander eine Alkylgruppe mit 1 bis 8 Kohlenstoffatomen darstellen, $R^5$ eine Alkylgruppe mit 1 bis 50 Kohlenstoffatomen, eine Cycloalkylgruppe mit 5 bis 12 Kohlenstoffatomen, eine Aralkylgruppe mit 7 bis 25 Kohlenstoffatomen oder eine Arylgruppe mit 6 bis 12 Kohlenstoffatomen darstellt.

## Revendications

**1.** Composition de résine ignifuge comprenant :

une résine de base (A) contenant une résine polyoléfinique ; et
un agent ignifuge comprenant un composé organique phosphoré (B) et un composé aminé encombré (C), le composé organique phosphoré (B) étant représenté par la formule générale (1) suivante et le composé aminé encombré (C) contenant un groupe représenté par la formule générale (2) suivante :

[Chim.1]

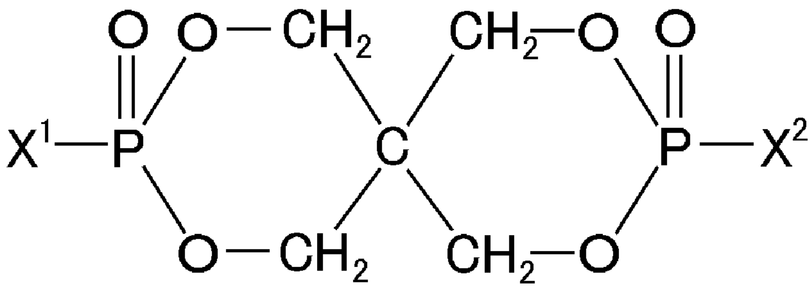

(1)

où, dans la formule générale (1), $X^1$ et $X^2$ représentent chacun un groupe hydrocarboné aromatique et peuvent être identiques ou différents ;

[Chim.2]

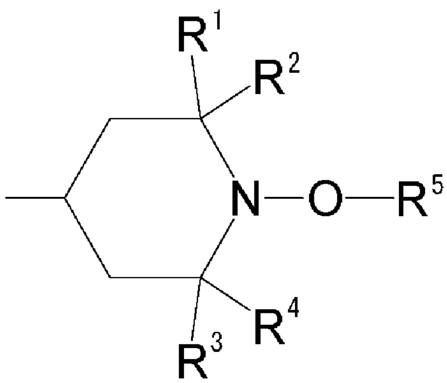

(2)

où, dans la formule générale (2), $R^1$ à $R^4$ représentent chacun indépendamment un groupe alkyle ayant 1 à 8 atomes de carbone, $R^5$ représente un groupe alkyle ayant 1 à 50 atomes de carbone, un groupe cycloalkyle ayant 5 à 12 atomes de carbone, un groupe aralkyle ayant 7 à 25 atomes de carbone ou un groupe aryle ayant 6 à 12 atomes de carbone.

**2.** La composition de résine ignifuge selon la revendication 1, dans laquelle le groupe hydrocarboné aromatique est un groupe phénylméthyle.

**3.** La composition de résine ignifuge selon la revendication 1 ou 2, dans laquelle le composé d'amine encombrée (C) est mélangé dans un rapport inférieur à 0,4 partie en masse pour 100 parties en masse de la résine de base (A).

**4.** La composition de résine ignifuge selon l'une quelconque des revendications 1 à 3, dans laquelle le rapport massique du composé organique phosphoré (B) au composé d'amine encombrée (C) est supérieur ou égal à 5,6.

**5.** La composition de résine ignifuge selon la revendication 4, dans laquelle le rapport massique du composé organique phosphoré (B) au composé aminé encombré (C) est inférieur ou égal à 11,1.

**6.** La composition de résine ignifuge selon l'une quelconque des revendications 1 à 5, dans laquelle le composé d'amine encombrée (C) contient un cycle triazine.

**7.** La composition de résine ignifuge selon l'une quelconque des revendications 1 à 5, dans laquelle le composé d'amine encombrée (C) ne contient pas de cycle triazine.

**8.** La composition de résine ignifuge selon l'une quelconque des revendications 1 à 7, dans laquelle le point de fusion du composé organique phosphoré (B) est supérieur à la température de fusion de la résine de base (A), et le point de fusion du composé d'amine encombrée (C) est inférieur à la température de fusion de la résine de base (A).

**9.** La composition de résine ignifuge selon l'une quelconque des revendications 1, 2 et 4 à 8, dans laquelle le rapport de

mélange du composé d'amine encombrée (C) pour 100 parties en masse de la résine de base (A) est de 0,5 partie en masse ou plus.

**10.** La composition de résine ignifuge selon l'une quelconque des revendications 1 à 9, dans laquelle le rapport de mélange du composé organique phosphoré (B) pour 100 parties en masse de la résine de base (A) est de 5 parties en masse ou plus.

**11.** La composition de résine ignifuge selon l'une quelconque des revendications 1 à 10, satisfaisant à l'une des exigences (a) ou (b) suivantes lorsqu'un essai de combustion pour les matériaux d'intérieur automobile basé sur la norme FMVSS n° 302 est effectué

(a) une auto-extinction est observée
(b) aucune auto-extinction n'est observée, mais la vitesse de combustion est inférieure ou égale à 102 mm/minute.

**12.** Utilisation de la composition de résine ignifuge selon l'une quelconque des revendications 1 à 11 comme partie isolante d'un câble.

**13.** Utilisation de la composition de résine ignifuge selon l'une quelconque des revendications 1 à 11 comme mélange maître ignifuge.

**14.** Câble comprenant :

un milieu de transmission composé d'un conducteur ou d'une fibre optique ; et
un isolant recouvrant le milieu de transmission,
l'isolant contenant une partie isolante composée de la composition de résine ignifuge selon l'une quelconque des revendications 1 à 11.

**15.** Corps moulé comprenant la composition de résine ignifuge selon l'une quelconque des revendications 1 à 11.

**16.** Le corps moulé selon la revendication 15, comprenant en outre au moins une couche en feuille contenant la composition de résine ignifuge.

**17.** Ignifuge comprenant :

un composé organique phosphoré (B) représenté par la formule générale (1) suivante ; et
un composé aminé encombré (C) représenté par la formule générale (2) suivante :

[Chim.3]

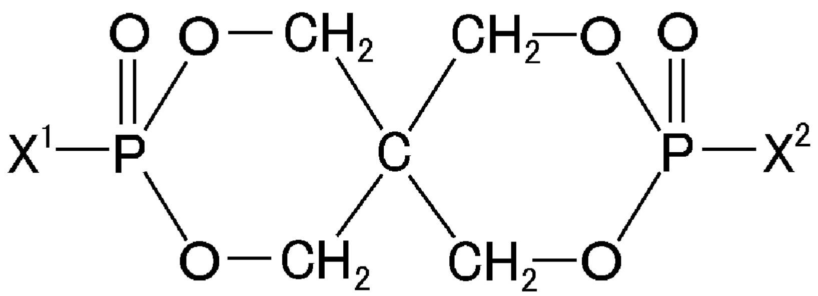

(1)

où, dans la formule générale (1), $X^1$ et $X^2$ représentent chacun un groupe hydrocarboné aromatique et peuvent être identiques ou différents ; et

[Chim.4]

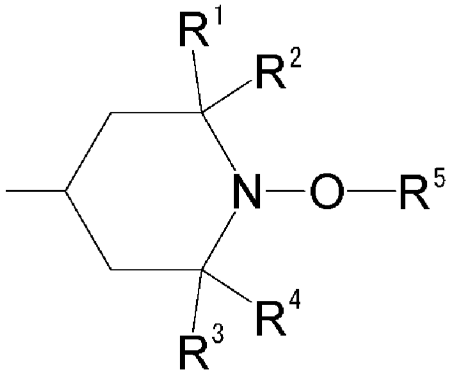

(2)

où, dans la formule générale (2), $R^1$ à $R^4$ représentent chacun indépendamment un groupe alkyle ayant 1 à 8 atomes de carbone, $R^5$ représente un groupe alkyle ayant 1 à 50 atomes de carbone, un groupe cycloalkyle ayant 5 à 12 atomes de carbone, un groupe aralkyle ayant 7 à 25 atomes de carbone ou un groupe aryle ayant 6 à 12 atomes de carbone.

Fig.1

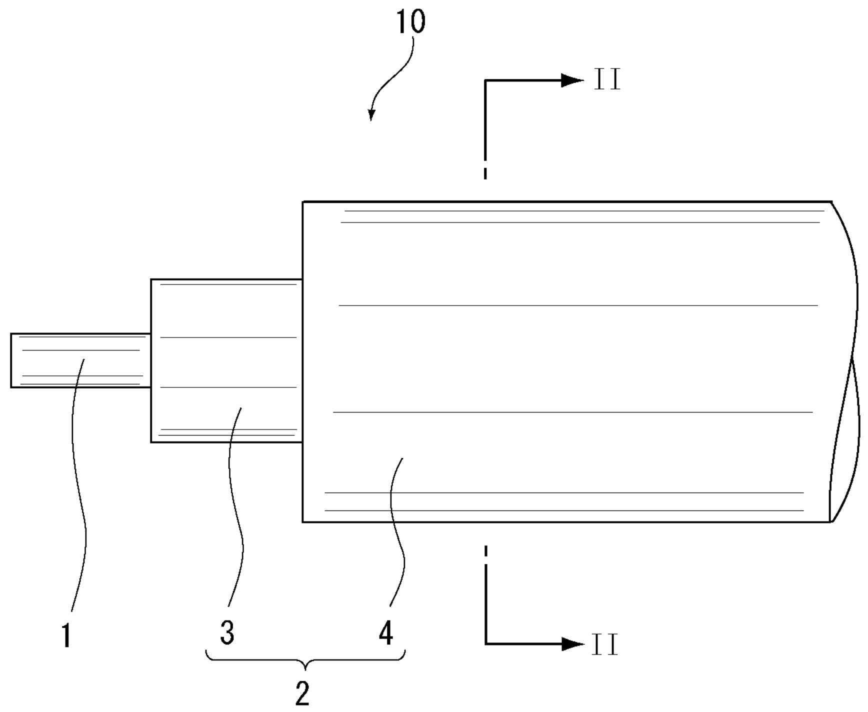

Fig.2

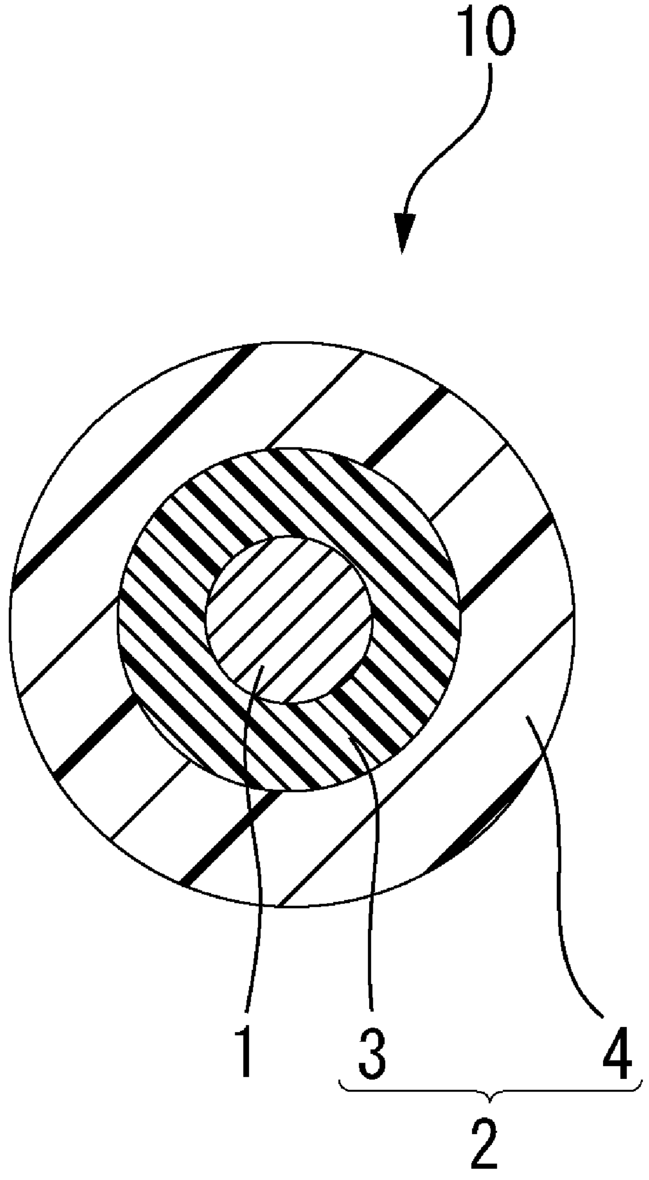

Fig.3

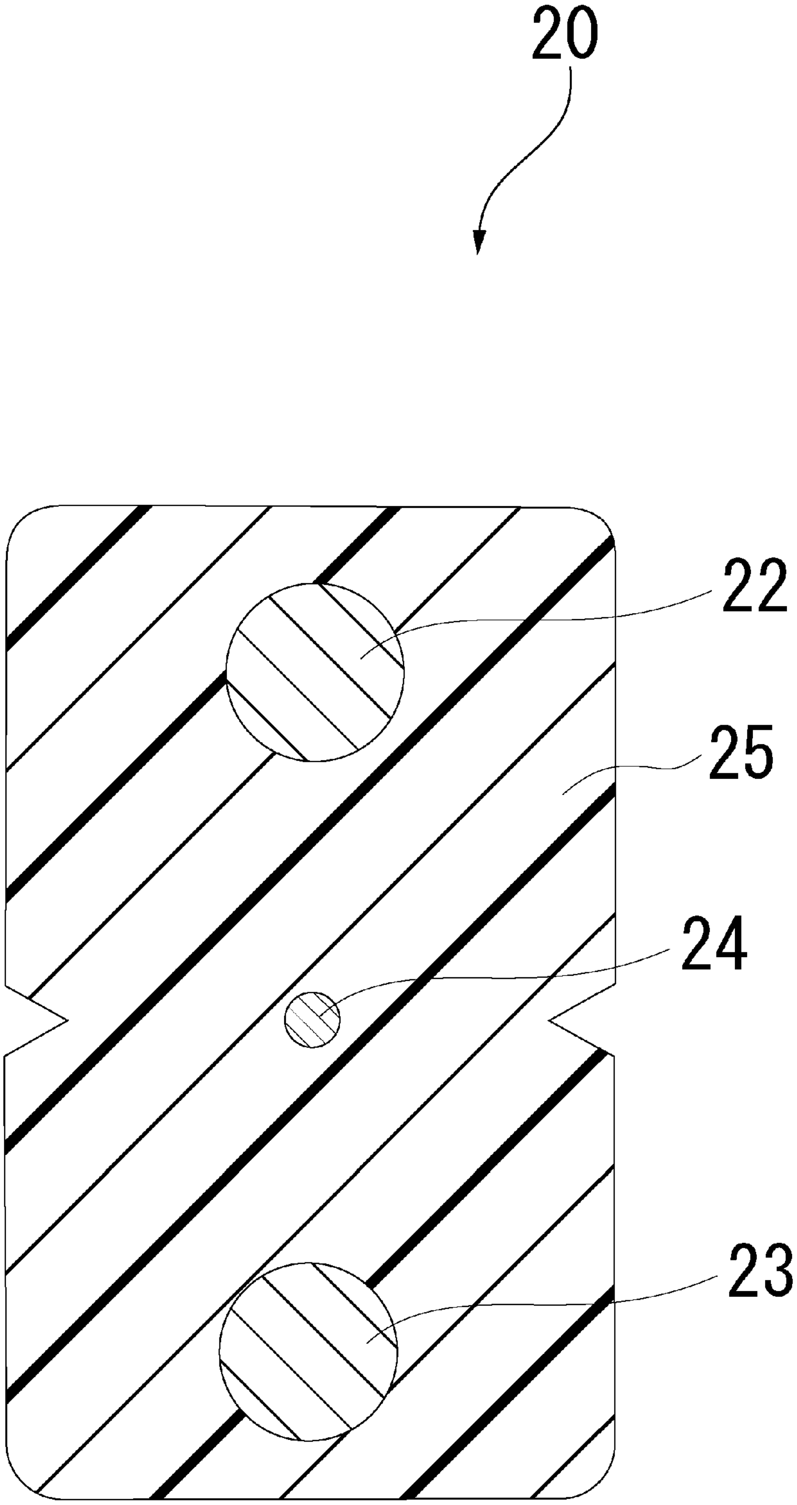

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3202834 A1
- US 2011257310 A1
- WO 2013174482 A1
- WO 2017015338 A1
- WO 2013136285 A1
- WO 2017013028 A1
- JP 2017066299 A